# EUROPEAN PATENT SPECIFICATION

(11) **EP 0 439 290 B1**
(45) Date of publication and mention of the grant of the patent: **16.10.1996**
(21) Application number: 91300392.7
(22) Date of filing: 18.01.1991
(51) Int. Cl.: G11B 27/19, G11B 15/04, G11B 19/04, H04N 5/78

(54) **Recording and reproducing apparatus**
Aufzeichnungs- und Wiedergabegerät
Appareil d'enregistrement et de reproduction

(30) Priority: 21.01.1990 JP 10866/90; 31.03.1990 JP 85700/90
(43) Date of publication of application: 31.07.1991
(73) Proprietor: SONY CORPORATION, Tokyo (JP)
(72) Inventor: Ishii, Toshiyuki, Shinagawa-ku, Tokyo (JP); Misono, Kousuke, Shinagawa-ku, Tokyo (JP); Tsuneki, Miwako, Shinagawa-ku, Tokyo (JP); Ota, Kiyoshi, Shinagawa-ku, Tokyo (JP); Nishigaki, Tetsuo, Shinagawa-ku, Tokyo (JP)
(74) Representative: Ayers, Martyn Lewis Stanley

(56) References cited:
- DE-A- 3 220 223
- DE-A- 3 340 572
- DE-A- 3 818 801
- US-A- 4 224 644

## Description

This invention relates to a recording and reproducing apparatus, and more particularly to a recording and reproducing apparatus for application to electronic devices for a consumer use such as a video tape recorder (VTR) for recording and reproducing a program, a so-called radio cassette and the like.

A tape recorder of the above described type is disclosed in United States patent number 4224644.

The following is a description of a conventional video tape recorder for consumer use. A plurality of programs are recorded on a video tape extending in the longitudinal direction of the tape. In this case, a program head fetching signal is recorded at the top position of each program. When the user wants to reproduce a desired program from a program recorded tape, the video tape recorder is temporarily set in a search mode. The video tape is quickly fed to a position in which the program head fetching signal can be regenerated. Thereafter, the video tape recorder is temporarily changed over to the reproducing mode, thus confirming whether or not the program is the one the user wants to watch.

There arise, however, the following problems inherent in this type of conventional video tape recorder. When confirming whether or not the user has seen a program content recorded on the video tape in the past, and if, for example, a plurality of programs are recorded in a single video cassette, the initial position of each program is searched. Subsequently, complicated operations have to be repeated, wherein the relevant program is reproduced to confirm the content thereof. Besides, it is required that the content be confirmed by reproducing the program per video cassette. Thus, troublesome handling is unavoidable in practical use.

Furthermore, this type of conventional video tape recorder presents the following problems. A mis-erasing preventive (write-protection) pawl is provided on the casing of the video cassette. Erasure prevention is effected by breaking off this pawl; its absence is detected by the VTR and used to inhibit recording.

However, the record-inhibition brought about by breaking off of the pawl applies to all the information recorded on the video tape of the video cassette, which is brought into the erase inhibiting status. As a result, for instance, if a plurality of programs were recorded on the video tape of the single video cassette, it is impractical by use of such a pawl to set only a predetermined one of a plurality of programs on the tape to the erase-inhibiting status.

Moreover this type of conventional video tape recorder presents the following problems.

The fact that the erase-inhibiting status is set by breaking off the pawl from the cassette casing makes it difficult to restore the video cassette to erasure-permission status. It involves the user in inconvenience such as having to cover the recess left open by the breaking off of the pawl with adhesive tape or similar. Thus, sufficient practicability is not provided.

Moreover, in a conventional video tape recorder for consumer use, a plurality of programs are recorded by reservation on a video tape extending in the longitudinal direction. In this case, the user sequentially reserves pieces of reservation information on respective programs by utilising an internal tuner and timer. Then, recording proceeds.

The conventional video tape recorder merely executes relatively simple functions. Therefore, a conventional information recording and reproducing apparatus could not execute the following elaborate control processes over the external units. The same apparatus could not record a picture in a reserved recording mode while interlocking with external units consisting of a variety of picture sources such as tuners, video tape recorders and the like for a desired period according to requirements. Besides, this prior art apparatus could not cause one or a plurality of video tape recorders to effect dubbing of regenerative video signals and monitors to display the pictures.

Moreover, in this type of conventional video tape recorder presents the following problems. The information on a plurality of programs is recorded only in program-recorded video tape positions per program. Therefore, when confirming or determining or searching for the program the user wants to reproduce, the search is repeated of the video tape recorder until the desired program is reached. This in fact requires a troublesome operation of quickly feeding the video tape over a long period of time.

In the case of managing a multiplicity of recorded video tapes or non-recorded video tapes or a so-called series program in which recording extends over a plurality of video tapes, this involves the following troublesome managing operations. The user has to write beforehand, on the cassette case or its storage sleeve the contents of the programs recorded on each video tape, recording time and the management information indicating whether to preserve the programs.

In practice, the labour of writing and reading the management information is troublesome. The labour involved increases cumulatively with the numbers of programs to be recorded or reserved and of the video tapes. It is therefore desirable that the operations be simplified as much as possible.

Moreover this type of electronic device for a consumer use, eg, a video tape recorder, is contrived as follows. One or a plurality of programs that the user wants to record are reserve-recorded by use of a program timer. Higher functions are executable by employing the information registered by reservation.

Where a plurality of users employ in common this type of conventional video tape recorder, however, there arise the following problems. When modifying or cancelling the reserve-registered information on the reserve-registered program, pieces of intermixed reserving information respectively registered by the plurality of users are indistinguishably displayed on the display screen at one time as they are. It is therefore difficult to grasp and read the contents of information reserved by users themselves.

If a time zone of a newly registered program is overlapped with that of a previously registered program, the following inconvenience is caused. It is impossible to know who registered the programs, time zones of which are overlapped from the contents displayed on the screen. For this reason, when modifying or cancelling the reserving contents registered, the user concerned cannot see whether it is necessary or advisable to obtain consent from other users. Hence, there is a possibility that programs having higher significance cannot be recorded, or only a partial recording is allowed to be done.

The multi-functionalised electronic device for consumer use presents the following problems. In order to execute a multiplicity of operation modes without causing any error, the user is required to input proper instructive information at a time adaptive to an operating status of the electronic device. In order to satisfy this requirement, a monitor display screen may be used as a means for inputting the information. Displayed on the display screen are interactive display elements such as messages or the like for presenting an input operation preformed by the user. An effective method is, it can be considered, to guide the user's operating procedures in accordance with the operating statuses of the electronic device in a man-machine interactive mode.

As a matter of fact, however, where the electronic device is highly multi-functional , the contents of messages displayed on the display screen become more and more complicated. For this reason, the user cannot be presumed to be able intuitively to decide the input operation to be done next.

US-A-4,224,644, on which the preamble of claim 1 is based, discloses a method and apparatus for controlling a tape player/recorder in which tape position numbers of the start and end of selections from the information recorded on a tape are recorded at a central location remote from the selections and are for use in locating a selected selection.

According to the present invention there is provided a system for controlling a recording and reproducing apparatus comprising : a recording medium; a recording track, formed in said recording medium and including a management database recording region and a program recording region in which programs are recorded; and management data recorded in said management database recording region and being in a form which is reproducible by said program reproducing apparatus for controlling the management by said program reproducing apparatus of the programs recorded on said recording mediums characterised by : said management data including for each of said programs, reproduction data representing information indicating whether or not the respective program has been reproduced previously from said recording medium; and the system further comprising means for displaying to a user the information represented by said reproduction data.

In the hereinafter described embodiment a representation element EYE_{OP} or EYE_{CL} can be displayed based on the reproducing information B3. It is possible to confirm whether or not each recorded program was reproduced in the past by a simple method of discerning the representation element EYE_{OP} or EYE_{CL}. This method does not require troublesome operations to make sure of the contents of each recorded program by reproducing it.

Advantageously, the management data includes data representing erase permission information or erase inhibition information and the apparatus is provided with means operative whereby said program on said recording medium is permitted to be erased or inhibited from being erased based on said erase permission in said erase inhibiting information.

In the hereinafter described embodiment, recorded in the management data recording region F_{AVV} or F_{AVA} of the recording medium 36 is the information for specifying the erase permission or erase inhibition to the recording medium 36. Based on this information, the recording and reproducing apparatus 1 is controlled in the erase permission or inhibition status. The user is thereby allowed to specify the erase permission or erase inhibition according to the necessity when setting the management date D_{AV} after charging the recording medium 36. As a result, operability by the user can be further improved.

In the hereinafter described embodiments, the erase permission or erase inhibiting of each of a plurality of program D₁-D₄ recorded on the recording medium 36 is specified by recording the erase permission/inhibition information as program information in changing the recording medium 36, the program information is read therefrom, whereby the an erase inhibition program can be prevented from being erased.

Preferably, said management data further includes program information corresponding to each of said programs recorded in said recording track of said recording medium.

Advantageously, said management data includes external unit control data subject for controlling a plurality of external units and the apparatus is provided with means for controlling said external units in accordance with said external unit control data.

In the hereinafter described embodiments, the external unit control data D_{CTL} stored as the management data D_{AV} can be transmitted as the control signals S30 through S33 to external units 61 through 64. The plurality of external units 61 through 64 can thereby be controlled.

Preferably, said management data includes data representing program reservation information prior to recording of said one of more programs for preventing the recording of said one or more programs by said recording apparatus during a predetermined time period, and a recorded program flag which is to be changed to a recorded program state by the reproducing apparatus upon recording of one or more programmes to redesignate said program reservation information as recorded program information.

In the hereinafter described embodiment, a recorded flag F_{RE}C is recorded as the management data D_{AV} in the management database recording region F_{AVA}, F_{AVV}. The program information written as reserving information is diverted to the recorded program information, thereby further simplifying the processes of recording and reserving information.

Advantageously, the management date includes subscriber data the apparatus is provided with means for using said management data to display a registration status of the program on a display screen comprising : means for allocating subscriber data of a program to said management data corresponding to the program, and means for displaying said registration status of the program based on the subscriber data.

In the hereinafter described embodiment, the registration status of the program is displayed on the display screens 4A, 6A in accordance with the subscriber data D_{PRG}. Even when the plurality of users employ in common the program reserving apparatus, the respective subscribers are able to readily confirm the program registration statuses necessary for the individual users. It is therefore feasible to surely grasp the program registration status.

Preferably, the apparatus includes means for prompting a responsive operation of the user by displaying interactive display elements representing operating conditions of an electronic device body on a display screen comprising a character display means for displaying a personified guide character exhibiting expressions and actions corresponding to display contents of said interactive display elements in positions corresponding to said interactive display elements on said display screen, and it may be that said personified guide character is composed of personified pictorial elements to be expressible as an animated picture.

In the hereinafter described embodiments, when indicating the interactive display elements AR1, AR3 to the user, there are displayed the guide character CH exhibiting expressions and actions corresponding to the display contents. The user is therefore able to intuitively readily grasp the operating conditions of the electronic device body with the help of the guide character CH. The corresponding information inputting operation can be performed more easily and accurately.

The hereinafter described embodiment may achieve the following advantages :-
1) To provide a recording and reproducing apparatus in which the user is able to confirm by a simple method whether or not a program recorded on a recording medium was reproduced in the past.
2) To provide a recording and reproducing apparatus capable of controlling a predetermined program in an erase-inhibiting status among a plurality of programs recorded on a single recording medium.
3) To provide a recording and reproducing apparatus capable of specifying an erase permission or inhibition status with priority to a condition of a mis-erase preventive pawl.
4) To provide an information recording and reproducing apparatus capable of further facilitating systematization with external units by transmitting control signals to the external units in a variety of forms as the demands arise.
5) To provide an information recording and reproducing apparatus capable of further simplifying the processes of recording and reserved information when recording and reserving the program (hereinafter referred to as record/reservation).
6) To provide a program reserving apparatus in which a plurality of users are able to easily grasp the contents of necessary reserving information even when the plurality of users employ in common the program reserving apparatus, so that, the operability of the apparatus can be further improved.
7) To provide an information inputting device arranged so that the user can intuitively accurately judge the guide display contents.

The invention will be further described by way of non-limitative example with reference to the accompanying drawings, in which :-

In the accompanying drawings:
FIG. 1 is a block diagram depicting a whole construction of a video tape recorder according to the present invention;
FIG. 2 is a block diagram illustrating functional blocks thereof;
FIG. 3 is a schematic diagram showing a recording format on a video tape;
FIGS. 4 to 6 are a schematic diagram and charts showing a configuration of management database;
FIG. 7 is a flowchart showing input information processing procedures of the video tape recorder;
FIGS. 8 and 9 are flowcharts showing management database processing procedures thereof;
FIG. 10 is a front elevation illustrating a construction of a remote controller;
FIG. 11 is a chart showing a configuration of a language specified item list;
FIG. 12 is a flowchart showing procedures of a [whether-to-see flag information] confirming process;
FIG. 13 is a chart illustrating graphic representations on display screens;
FIG. 14 is a flowchart showing record permission/inhibition processing operations;
FIG. 15 is a schematic diagram depicting a record inhibiting region on the video tape;
FIG. 16 is a flowchart showing record permission/inhibition processing operations;
FIG. 17 is a flowchart showing record permission/inhibition judging procedures illustrating graphic representations on display screens;
FIG. 18 is a flowchart showing other embodiments;
FIG. 19 is a chart showing a configuration of external unit control data D_{CTL};
FIG. 20 is a schematic diagram of assistance in explaining the control over the external units according to this invention;
FIG. 21 is a schematic diagram of assistance in explaining other embodiments;
FIG. 22 is a flowchart showing a recorded flag data writing process; FIG. 23 is a chart showing a variety of flags;
FIG. 24 is a chart showing a reservation display screen;
FIG. 25 is a chart showing a reservation display screen according to subscribers;
FIG. 26 is a chart showing an overlap reservation display;
FIG. 27 is a front elevation for a description of display region of a display screen;
FIGS. 28 to 44 are schematic diagrams showing display elements of guide characters CH; and

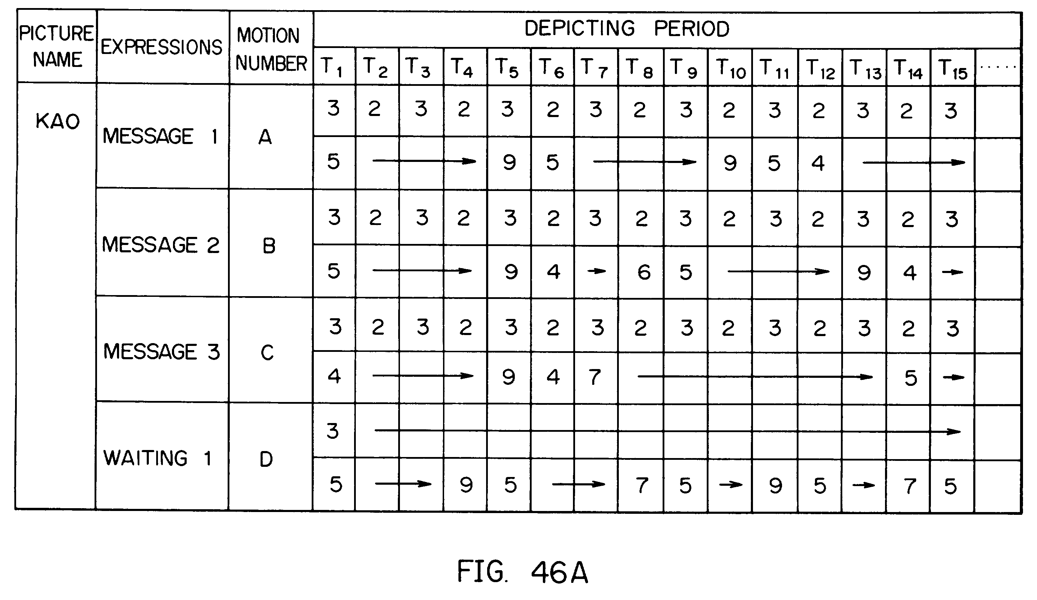

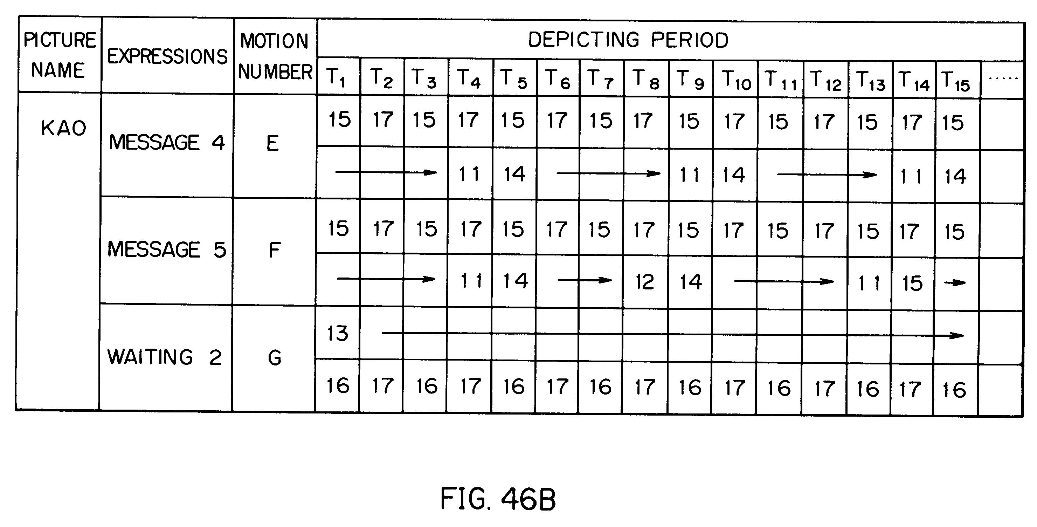

FIGS. 45 and 46 are charts for describing basic pictures, and actions and expressions of faces thereof.

Preferred embodiments of this invention will be described with reference to the accompanying drawings.

### [1] First Embodiment

### (1) Whole Construction of Video Tape Recorder

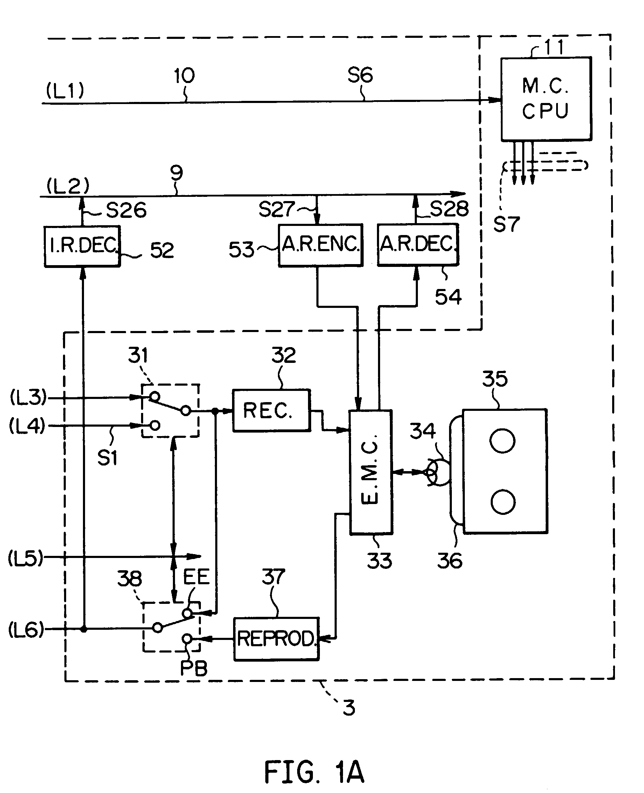

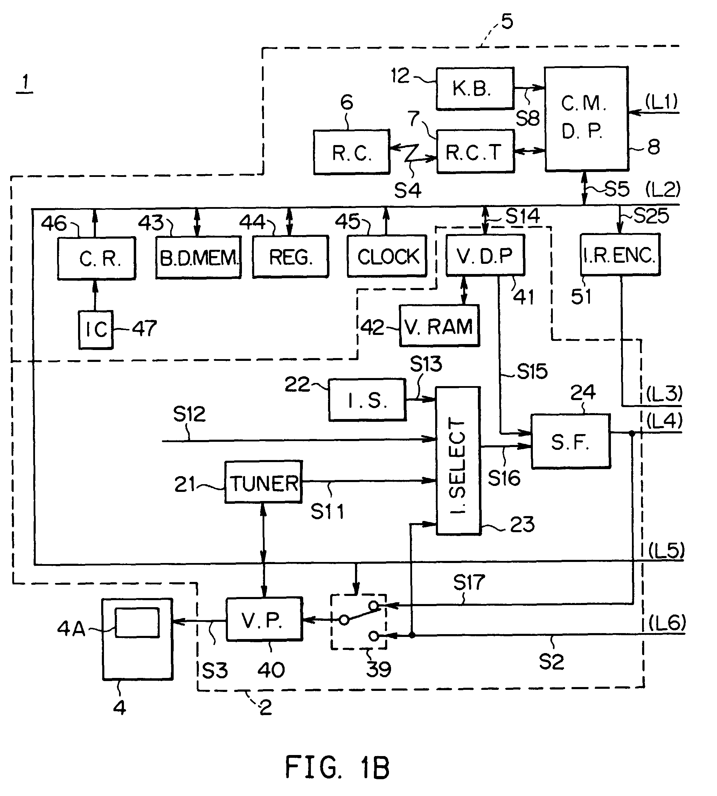

FIG. 1 illustrates a video tape recorder (VTR) 1 as a whole. A recording video signal S1 inputted via a video signal processing unit 2 is supplied to a VTR unit 3, thereby recording a picture. Simultaneously, a reproducing video signal S2 is supplied as a video output signal S3 to a monitor 4 through a video signal processing unit 2.

A control management data processing unit 5 is provided in addition to the components given above. An I/O information signal S4 given from a remote controller 6 is transmitted via a remote control transceiver 7 to a central processing unit (CPU) 8 for processing the control management data. A piece of control information S5 is transmitted to a bus 9, thereby controlling circuit elements combined to configure the video signal processing unit 2 and the VTR unit 3. The control information S6 is communicated via a bus 10 between the control management data processing CPU 8 and a mechanism control CPU 11 of the VTR unit 3. As a result, there is generated a control signal S7 for mechanism elements of which the video tape recorder unit 3 is composed.

The video signal processing unit 2 works in the following manner. Inputted via an input selecting circuit 23 to a superimpose fader circuit 24 are a receiving video signal S11 received by a tuner 21, an external line video signal S12 supplied from an input line serving as an external video signal source and an internal synchronous signal S13 generated by an internal synchronous circuit 22. The recording video signal S1 is thus obtained at an output terminal of the superimpose fader circuit 24.

The recording video signal S1 is supplied via a record switching circuit 31 to a recording circuit 32. The recording video signal S1 is recorded on a video tape 36 of a video cassette 35 by use of a magnetic head 34 through a recording mode electromagnetic converting circuit 33.

The video signal thus recorded on the video tape 36 is picked up by a reproducing circuit 37 sequentially through the reproducing mode magnetic head 34 and the electromagnetic converting circuit 33. The video signal is then transmitted as a reproducing video signal S2 via a reproducing switching circuit 38 to the video signal processing unit 2.

This reproducing video signal S2 is converted into a video output signal S3 by means of a video processing circuit 40 through an output selecting circuit 39. The video output signal S3 is displayed on a display screen 4A of a monitor 4.

Basic data is stored in a ROM-based basic data memory 43 on the basis of the I/O information signal S4 inputted from the remote controller 6 or an input information signal S8 inputted from a VTR keyboard 12. Process data is stored in a RAM-based register 44. The control management data processing CPU 8 of the control management data processing unit 5 processes the basic and process data in accordance with a clock signal of a clock circuit 45. Pieces of control information S5 and S6 are thereby transmitted to the buses 9 and 10.

In this embodiment, a card reader 46 is connected to the bus 9. The control management data processing CPU 8 is capable of taking the basic data read from an IC card 47 by the card reader 46 into a register 44.

A processed result is obtained by effecting the data processing in the CPU 8. When there is a necessity for informing the user of the result, the CPU 8 supplies an image display information signal S14 as a part of the control information S5 to a video display processor 41. An image display signal S15 read from a video RAM 42 in response to the information signal S14 is supplied to the superimpose fader circuit 24. A superimpose output signal S17 is generated by superimposing the display signal S15 on a video signal S16 supplied from the input selection circuit 23. The superimpose output signal S17 is supplied via an output selection circuit 39 to an image processing circuit 40. A picture is formed by superimposing an image signal consisting of a letter, a character and a line on the video signal. The picture is displayed on the display screen 4A of the monitor 4, thereby giving an interaction to the user.

In this embodiment, when displaying the image composed of the letter, character and line on the screen 4A of the monitor 4, the control management data processing CPU 8 supplies the remote controller 6 with the image signal representing the same image as the I/O information signal S4 from the remote control transceiver 7. In consequence of this step, the same image as that displayed on the screen 4A of the monitor 4 is displayed on a display screen 6A of the remote controller 6.

The CPU 8 records write management data S25 as a part of the control information S5 on video recording tracks of the video tape 36, the data S26 being associated with recording and reproducing operations of the VTR unit 3. This recording process is effected sequentially through an image recording encoder 51, the record switching circuit 31, the recording circuit 32 and the electromagnetic converting circuit 33. The management data written to the video recording tracks is read via a reproducing switching circuit 38. Subsequently, the management data is, after passing through the electromagnetic converting circuit 33, the reproducing circuit and the reproducing switching circuit 38, taken as readout management data S26 into the CPU 8.

In accordance with this embodiment, the control management data processing CPU 8 additionally supplies the electromagnetic converting circuit 33 with write management data S27 similar to the data S25 given to the image recording encoder 51 via a audio recording encoder 53. The data S27 is recorded on audio recording tracks of the video tape 36 by use of the magnetic head 34. Simultaneously,the management data recorded on the audio tracks of the video tape 36 is read from the electromagnetic converting circuit 33 through the reproducing mode magnetic head 34 to a audio recording decoder 54. The management is taken as readout processing data S28 into the CPU 8.

### (2) Function Blocks of Video Tape Recorder

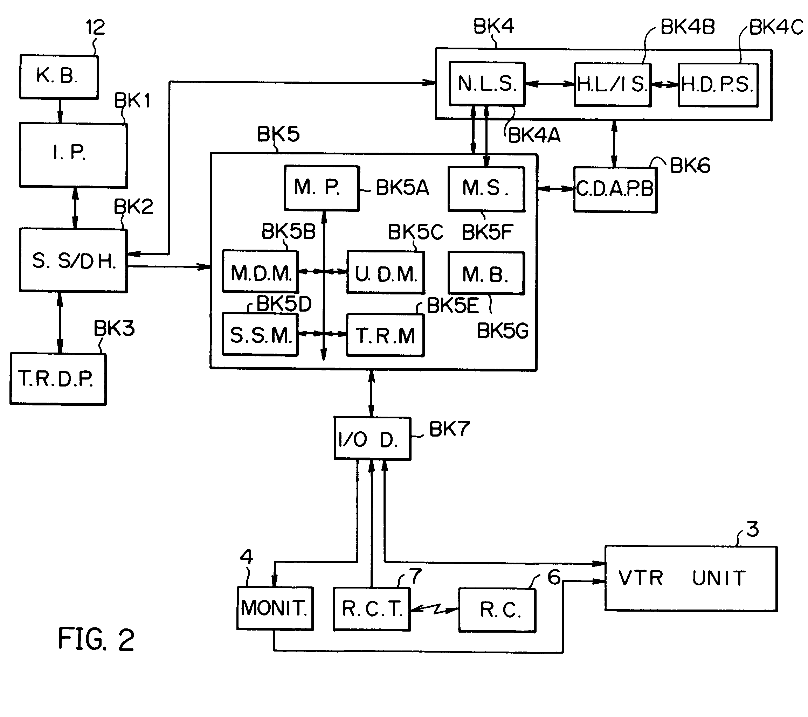

The control management data processing CPU 8 controls the video tape recorder as a whole in conformity with the function blocks depicted in FIG. 2.

To be specific, the CPU 8, when receiving an instruction input from the keyboard 12, functions as an interrupt processing means in a block BK1. Thereafter, the CPU 8 functions as a system schedule/database holding means in a block BK2. At this time, the system schedule/database holding means make communications between itself and a timer reservation database preparing means of a block BK3 while managing a timeseries of the entire system. The system schedule/database holding means executes functions as an artificial intelligence module indicated by a block BK4 as well as an application processing means indicated by block BK5.

In the artificial intelligence module BK4, the CPU 8 discerns a content of instruction inputted in natural language in accordance with inputting of instruction items expressed in the natural language by a natural language system BK4A.

Based on a mode of the natural language instruction content, a habit of the user is learnt and inferred by a habit learning/inferring system BK4B. Simultaneously, a habit database is prepared by a habit database preparation system BK4C.

In the application processing means BK5, the CPU 8 cooperates with the module processing means BK5A to execute functions of a management database module BK5B, a user's desire module BK5C, a system set module BK5D and a timer reservation module BK5E.

Concurrently, in the application processing means BK5, the CPU 8 executes a message display process in a message system BK5F. The CPU 8 then executes a display process of the monitor 4 in a monitor block BK5G.

When performing the processes of the artificial intelligence module BK4 and the application processing means BK5, the CPU 8 executes a timer reservation packet process and a flag process in a common data area processing block BK6.

When effecting the processes in the application processing means BK5, the means BK5 is connected via the I/O driving means BK7 to external units such as the VTR unit 3, the monitor 4, the remote control transceiver 7 and the remote controller 6.

### (3) Recording Format of Video Tape

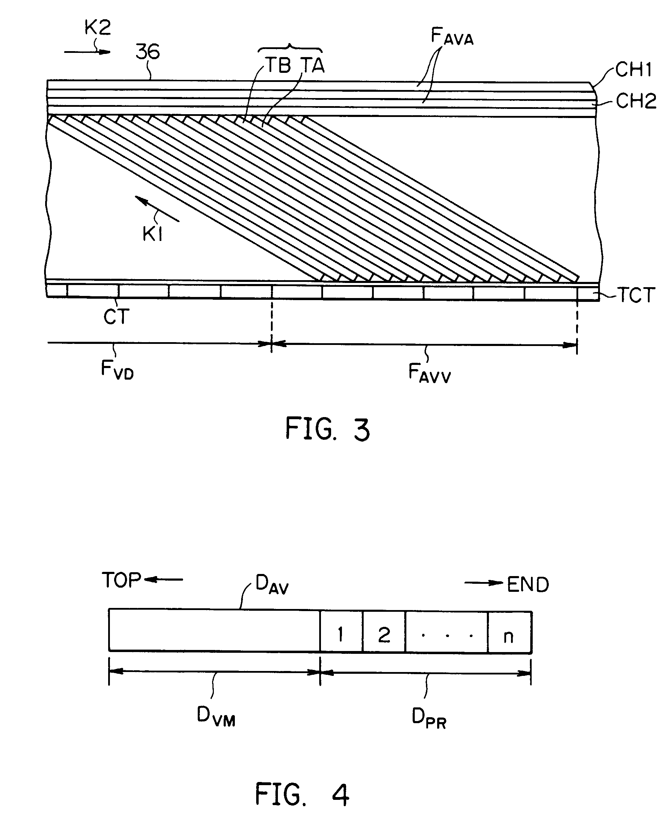

The following is a description of an arrangement of a video tape 36. As illustrated in FIG. 3, video recording tracks TA and TB having azimuth angles different from each other are formed in a head scanning direction K1 obliquely across a tape traveling direction K2. The recording tracks TA and TB are sequentially adjacent in the tape traveling direction K2. A control signal (CTL) recording track TCT is formed in a longitudinal direction of the video tape 36 so that the track TCT is located at an external edge on the extending direction of the video recording tracks TA and TB. A control signal CT is recorded on the control signal recording track TCT. Two channel audio recording track CH1 and CH2 are formed at an edge of the video tape 36 on the separating direction.

Formed at the record starting top part of the video tape 36 is a management database video track recording region F_{AVV} extending over predetermined several video recording tracks TA and TB. Subsequent to the management database video track recording region F_{AVV}, a video signal recording region F_{VD} is formed to record 1-field video signal with respect to the respective video recording tracks TA and TB.

Management data D_{AV} configured as illustrated in FIG. 4 are recorded on the recording tracks TA and TB which belong to the management database video track recording region F_{AVV}.

A management database audio track recording region F_{AVA} is formed in a predetermined track location, for instance, in the tape top part of the audio recording track CH1 and CH2. The management data having a configuration depicted in FIG. 4 is similarly recorded in this region F_{AVA}.

The management data D_{AV} is arranged so that a volume information block D_{VM} and a program information block D_{PR} are recorded sequentially from the top part of the recording track.

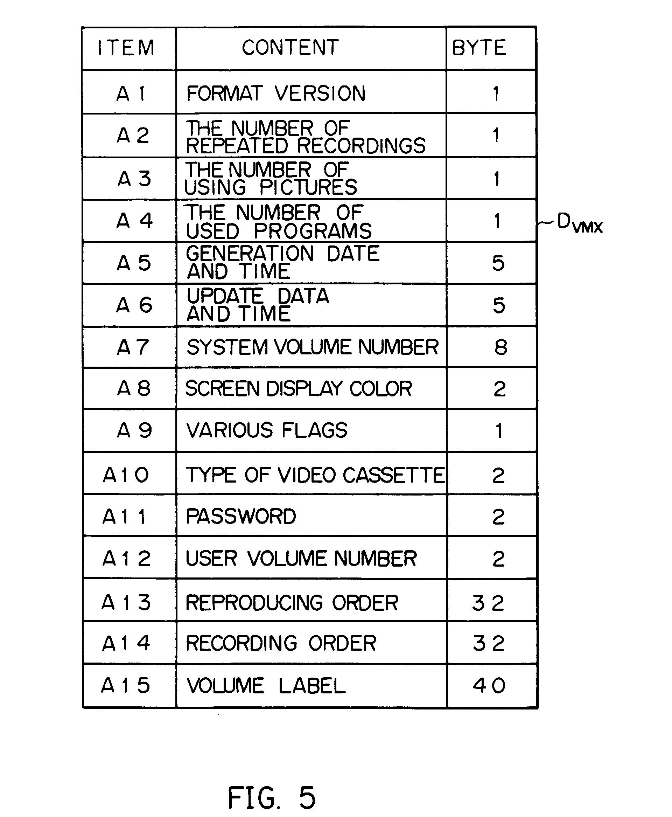

The volume information block D_{VM} consists of pieces of management information on the video cassette 35 incorporated into the VTR unit 3. The volume information block D_{VM} is recorded as pieces of 135-byte volume information containing, as illustrated in FIG. 5, items A1 - A15.

The information of the item A1 represents a [format version]. The number of versions of the management data D_{AV} is recorded based on the 1-byte data, thereby identifying the format version concerned when mounting the video cassette 35. With this arrangement, in the case of the management data D_{AV} of even old version, the system is set so that the data can be processed.

The item A2 represents [the number of repeated recordings]. For example, the management data D_{AV} is recorded in the management database audio track recording region F_{AVA} in accordance with the 1-byte data. At this time, the number of repeated recordings is recorded. The number recordings of the management data D_{AV} by employing the audio signal recording system is recorded as a reference material.

The item A3 indicates [the number of using pictures]. When recording the management data D_{AV} on the video cassette 35 in accordance with, e.g., the 1-byte data, the number of recording tracks occupied by a management database video track recording region F_{AVV} is recorded. With this arrangement, the system discerns a top track location of the video signal recording region F_{VD}.

The item A4 indicates [the number of used programs]. T The number of programs reserved or recorded in the video cassette 35 and existence of non-existence of a recording space are recorded on the basis of, e.g., 1-byte data.

In this embodiment, the number of recordable programs reserved or recorded in 0-6 bits is 32 at the maximum. In accordance with the 7th bit, there is recorded a result as to whether there exists a recording space (represented by a logic [0]) or not (represented by a logic [1]). With this arrangement, even when the number of used programs is less than 32 at the maximum depending on a tape length of the video cassette 35 or a length of the programs reserved or recorded, if no recording space exists, this can be confirmed by the 7th bit.

The item A5 represents [generation data and time]. Recorded are the data and time when initially writing the management data D_{AV} in the video cassette 35 on the basis of 5-byte data.

In this embodiment, [minute], [hour], [date], [month] and [year] are recorded by binary coded decimal numbers of 2 digits in the first through fifth bytes. Oldness of the video cassette 35 can be known from the volume information D_{VM} of the item representing the data and time of generation.

The item A6 indicates [update date and time]. The date and time when modifying the management data D_{AV} on the basis of, e.g., 5-byte data are recorded.

In accordance with this embodiment, the data on the update data and time are treated so that [minute], [hour], [date], [month] and [year] are recorded by the binary coded decimal numbers sequentially in the first through fifth bytes. It is thus possible to confirm when the presently used management data D_{AV} is modified.

The item A7 indicates [system volume number]. If the video cassette 35 is classified as so-called series videos based on, e.g., 8-byte data, the series number concerned is recorded by using the 80byte data. It is therefore feasible to confirm that the video cassette 35 loaded at the present is a kind of series videos as well as to discern the series number thereof. A system volume number is added to the record reservation information held by the VTR unit 3, whereby those matters are displayed on the monitor. The user is thus informed of a video tape 36 which will be reservation-recorded.

The item A8 represents [screen display color]. In the case of displaying, e.g., a list on the basis of, e.g., 2-byte data, a display color for the list can be specified. When displaying the list on the screen after the user has loaded the video cassette 35, it is possible to immediately discern which cassette to be loaded by the user from the display list color on the screen.

The item A9 represents [various flags]. The data on plural kinds of flags can be recorded on the basis of, e.g., 1-byte data.

In this embodiment, the user is allowed to record a flag of [inhibition of recording] In the 0th bit, thereby preserving the recorded contents of the video cassette 36.

A [formatted] flag can be inputted to the first bit by the system. It is thus possible to confirm whether or not all the recording areas of the video tape 36 are completely formatted.

An [address mode] flag representing a type of program end address can be inputted to the second and third bits by the system. In consequence of this, even if the program end address is recorded in a mode which differs depending on the video cassette 35, this can surely be detected.

The Item A10 represents a [type of video cassette]. A length and a type of the tape can be recorded based on, e.g., the 2-byte data.

According to this embodiment, the system is capable of automatically setting In the first byte. Whereas in the second byte, the user is able to set as the nececessity arises. When loading the video cassette 36, a hub diameter can be recognized by confirming the type and length of the tape.

The item A11 represents [password]. The user is allowed to register a password expressed by binary coded decimal numbers of four digits in accordance with, e.g., 2-byte data.

The user registers the password in the video cassette 35. The video cassette 35 is loaded in the VTR unit 3, if the user con not properly input the password registered in the video cassette 35, the recording/reproducing processes of the video cassette 35 are inhibited. This inhibits an observation of contents of the video tape 36.

The item A12 represents [user volume number]. On the basis of, e.g., the 2-byte data, the user is allowed to record a video cassette file number, i.e., a volume number on the video cassette 35 as the user desires. In this embodiment, the volume number can be added by the binary coded decimal numbers within a numeric value range of 0-64000. The user volume number is added to the record reservation information held by the VTR unit 3, thereby displaying it on the monitor. With this arrangement, the user can be informed of the video tape 36 which will be recorded by reservation.

The item A13 represents [reproducing order]. According to the necessity, the reproducing order of 32 programs at the maximum is recordable based on, 32-byte data. In a so-called program reproducing mode, the programs recorded in the order from the first byte to the 32nd byte are sequentially specified. The programs can thus be reproduced.

The item A14 represents [recording order]. The serial numbers of the 32 program at the maximum are recordable in 32 recording order positions on the basis of, e.g., the 32-byte data.

In the so-called program reproducing process, the programs with the serial numbers recorded sequentially from the first byte to the 32nd byte can thus be reproduced.

The item A15 represents [volume label]. The user is allowed to add labels such as a title to the video cassette 35 in accordance with, e.g., 40-byte data as the demands arise. A volume label is added to the record reservation information held by the VTR unit 3, thereby displaying it on the monitor. With this arrangement, the user can be informed of the video tape 36 which will be recorded by reservation.

In this embodiment, 40 characters at the maximum are recordable when using ASCII codes. In the case of employing S-JIS codes, labels of 20 characters at the maximum are recordable.

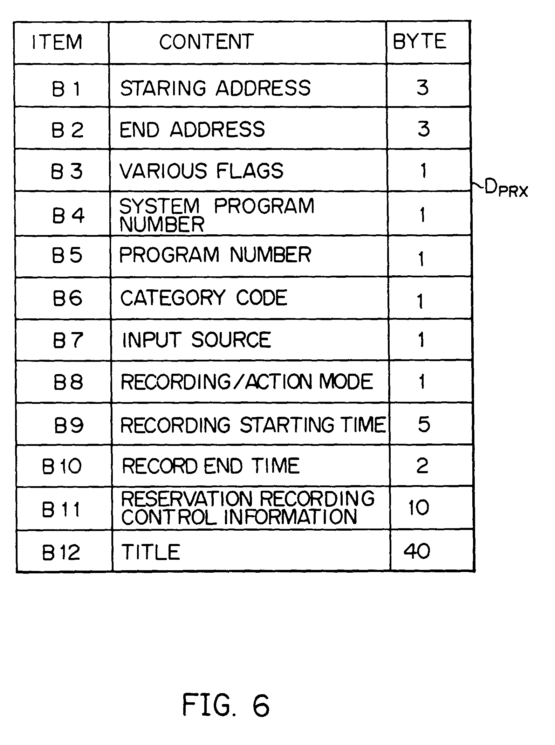

Contrastingly, the program information block D_{PR} is, as illustrated in FIG. 4, composed of program information D_{PRX} shown in FIG. 6, corresponding to the program information recorded or record-reserved on the video tape 36 of the video cassette 35.

The item B1 represents [starting address]. The programs are recorded in a video signal recording region F_{VD} of the video cassette 35. Thereafter, in accordance with the [byte] data, a starting address value of each program is written by the system on the basis of the top address of the video tape 36.

In this embodiment, as modes of the address values, there are selectively applicable a time mode ([second], [minute] and [hour] are expressed by the binary coded decimal numbers), a program number mode ( the program numbers based on the VASS (Video Address Signal Search) (VHS) standard are indicated) and a control signal mode (representation by the number of CTL pulses on the basis of the CTL (β) standard).

The item B2 represents [end address]. A program end address value from the top position of the video tape 36 is recorded based on, e.g., the 3 byte data.

In this embodiment, as in the case of the program starting address value, the program end address value is so arranged as to select the time mode, the program number mode and the control signal mode.

The item B3 represents [various flags]. A piece of information indicating a handling status of the program information concerned is recorded based on, e.g., the 1-byte data.

Written to the 0th bit in this embodiment is [recorded information](indicating whether the relevant program is in the recording state or not). Written to the first and second bits is [record end status information](indicating an end status when the record has been finished). Written to the third bit is [record permission flag](indicating whether the record is inhibited or not). Written to the fourth bit is [whether-to-see flag information](indicating whether or not the user sees the relevant recorded program once).

The item B4 represents [system program number] A series of file numbers put on the relevant programs by the system are recorded based on, e.g., the 1-byte data.

In this embodiment, a series of numerals consisting of [0], [1], [2],... are written sequentially from the top of the tape as system numbers.

The item B5 represents [program number]. The user is able to input the number of times of a series program (for instance, a serial drama) in accordance with, e.g., the 1-byte data.

The item B6 represents [category code]. Categories (for example, sports, news, dramas, etc.) of program contents are recorded based on, e.g., the 1-byte data.

The item B7 represents [input source]. An input source indicating where the relevant program is obtained is recorded based on, e.g., the 1-byte data.

Written in this embodiment are the channel number selected by a tuner 21 (FIG. 1) and the outside line number of an outside line video signal S12 as information indicating contents of the source.

The item B8 represents [recording/action mode]. An action mode and a recording mode for the video cassette 35 are written based on, e.g., the 1-byte data.

In this embodiment, when the recording process on the video cassette 35 is effected by means of the VTRA of the [β system], [VHS system] or [8mm video system], the recording modes are written. In the β system, the types of [β Is mode], [β II mode] and [β III mode are written. In the VHS system, the types of [SP system], [LP system] and [EP system] are written. In the 8mm video system, the types of [SP mode] and [LP mode] are written. As action modes during the record, the types of for instance, [ordinary recording mode], [only-reference-signal writing mode], etc. are written.

The item B9 represents [record starting time]. A starting time of the recorded program or reservation is recorded based on, e.g., the 5-byte data.

In this embodiment, [minute], [hour], [date], [month] and [year] are sequentially written to the 1st through 5th bytes by the binary coded decimal numbers.

The item B10 represents [record end time]. An end time of the recorded program or reservation is recorded based on, e.g., the 2-byte data.

In this embodiment, the [minute] and [time] data are written to the 1st and 2nd bytes by the binary coded decimal numbers.

The item B11 represents [reservation recording control information]. Reservation recording is set in VTR unit 3 (FIG. 3) in accordanee with, e.g., the 10-byte data when executing reservation recording. Recorded simultaneously is the information for controlling peripheral units to be operated corresponding to the foregoing process.

The item B12 represents [title]. The character information indicating a title of the program concerned is written based on, e.g., the 40-byte data.

### (4) Setting Process of VTR

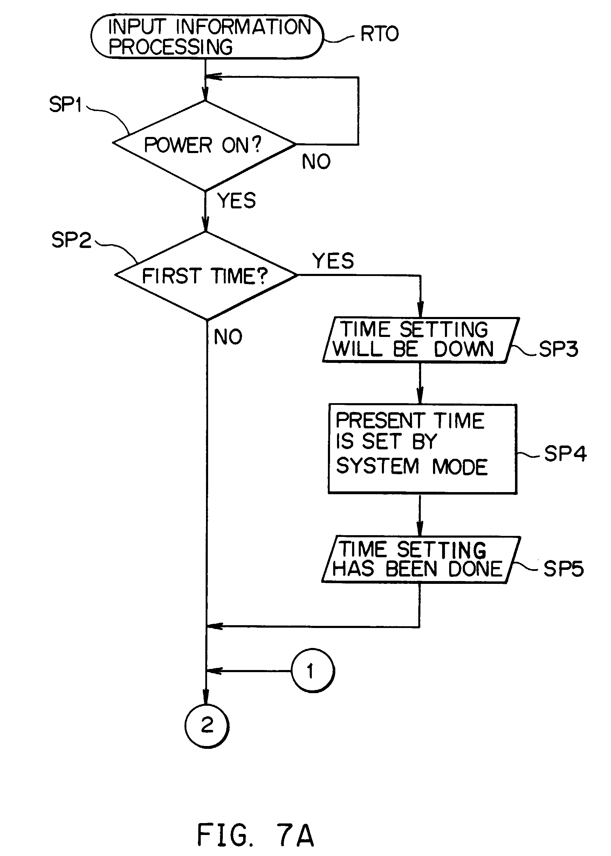

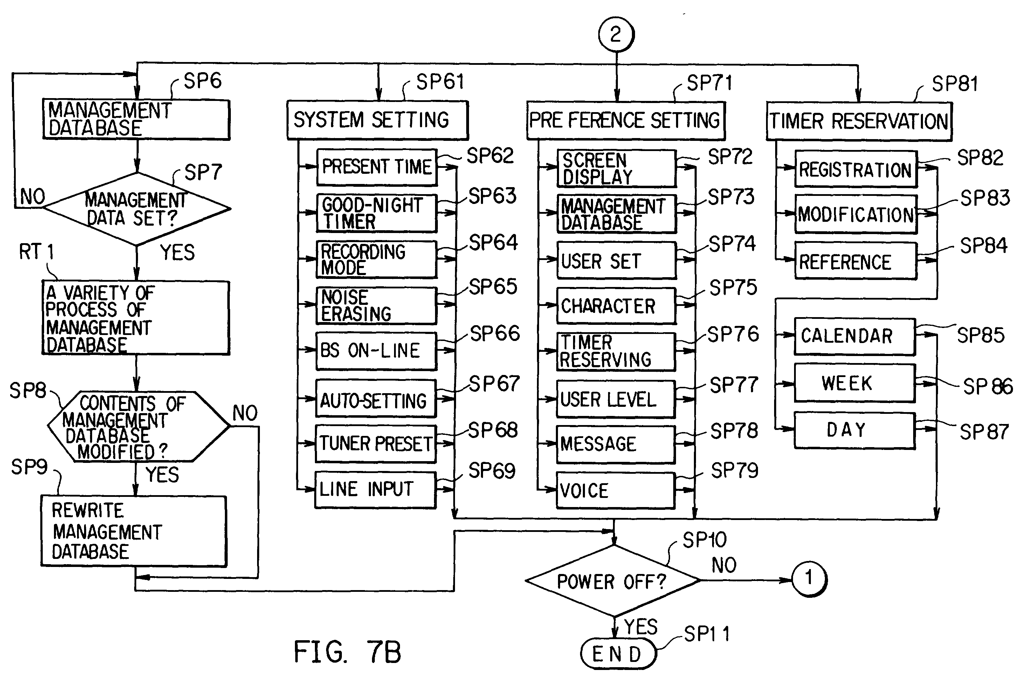

Based on instructions signals inputted from the remote controller 6 or the keyboard 12, the CPU 8 controls the control management data processing unit 5, the video signal processing unit 2 and VTR unit 3. This control process is performed in the status specified by the user in conformity with processing programs RT0, RT1, and RT31 shown in FIGS. 7 through 9.

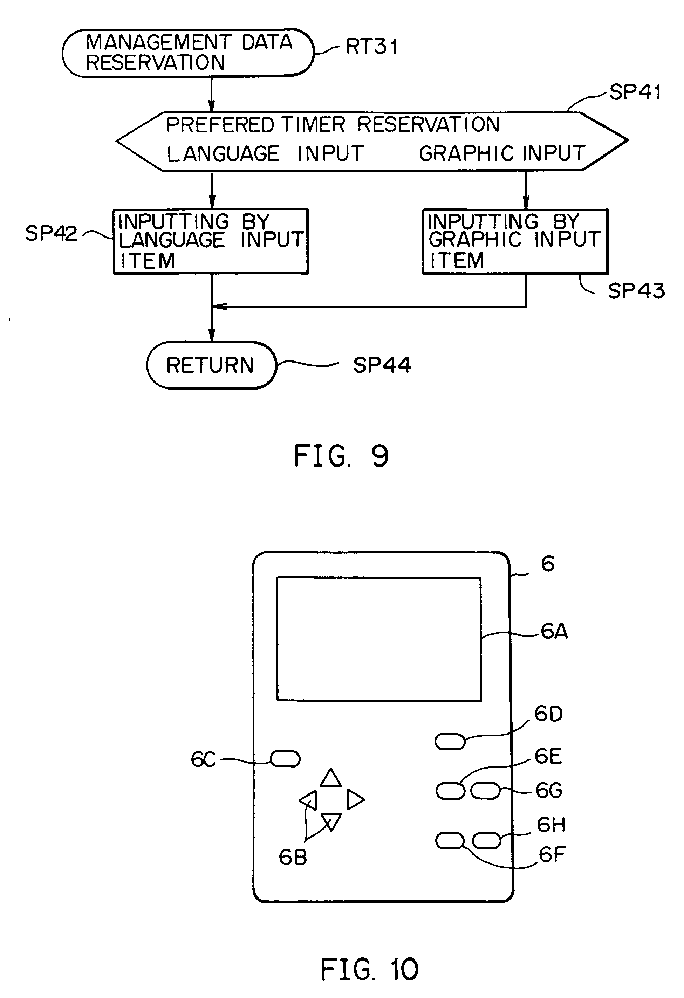

In this embodiment, the remote controller 6, as illustrated in FIG. 10, has a display screen 6A provided constructed by providing a touch panel on a liquid crystal plate as an operating panel on the case surface. When the listed items specified are displayed on the display screen 6A, the click inputs are effected by touching directly on the respective display items. Specifying signals associated with the display items concerned can thus be inputted. In addition, the cursor displayed on the screen 6A is moved by a 4-directional cursor key 6B, thus specifying a predetermined display item. Thereafter, the specifying signal relative to the display item concerned can be inputted by handling an execution key 6C.

The remote controller 6 further includes a normal operation instructing key 6D, a menu display instructing key 6E, a management data mode instructing key 6F and reservation 1/reservation 2 operation mode specifying keys 6G and 6H. These mode specifying keys serve to specify the operation modes of the VTR 1 for CPU 8.

At a step SP1 of the input information processing program RT0 shown in FIG. 7, the CPU 8 waits till the power supply is turned ON. If an affirmative result is obtained, the CPU 8 judges whether the power-ON is the first time or not at a step SP2. If that is the first time, the CPU 8 sequentially executes processes of steps SP3, SP4 and SP5. As a result, a message of [time setting will be done] is displayed on a display screen 4A of a monitor 4 as well as on the display screen 6A of the remote controller 6. Subsequent to this step, the present time is set in the system setting operation mode. A message of [time setting has been done] is then displayed on the screens 4A and 6A.

The VTR 1 is thus brought into an instruction waiting status in which the present time is set.

This instruction waiting status is retained continuously even when a negative result is obtained at the step SP2. In the instruction waiting status, there is developed a situation where the items such as [management database], [system setting], [preference setting] and [timer reservation] can selectively be specified.

As a matter of course, in the instruction waiting status, the CPU 8 causes the remote controller 6 (or the keyboard 12) to execute the operation mode specifying display of [management database], [system setting], [preference setting] and [timer reservation] on the display screens 6A and 4A by manipulating the menu display mode specifying key 6E therein. Consequently, the user is able to specify one of the operation modes by the click operation.

In the [management database] mode, the management data D_{AV} (FIG. 4) is recorded in a management database video track record region F_{AVV} or a management database audio track record region F_{AVA} of the video tape 36 (FIG. 3). Alternatively, in the operation mode of drive-controlling the VTR unit 3 by using the recorded management data D_{AV}, the CPU 8 judges whether the video cassette 35 is set or not at a step SP7 when the item of [management database] is clicked among the menu display items at the step SP6, the video cassette 35 containing the tape (referred to as a management data tape) on which the management data D_{AV} has been recorded. If set, a variety of processes of the management database are executed in a subroutine RT1. Thereafter, at a step SP8 the CPU 8 judges whether or not the contents of the management database are modified. If modified, at a step SP9 the CPU 8 executes a process to rewrite, into management data after being modified, the data recorded in the management database video record region F_{AVV} or the management database audio track record region F_{AVA}.

In this manner, the processes relative to the management database have been finished. At a step SP10, the CPU 8 judges whether the power supply is turned OFF or not. If the answer is negative, the CPU 8 reverts to the instruction waiting status described above. If affirmative, the input information processing program comes to an end at a step SP11.

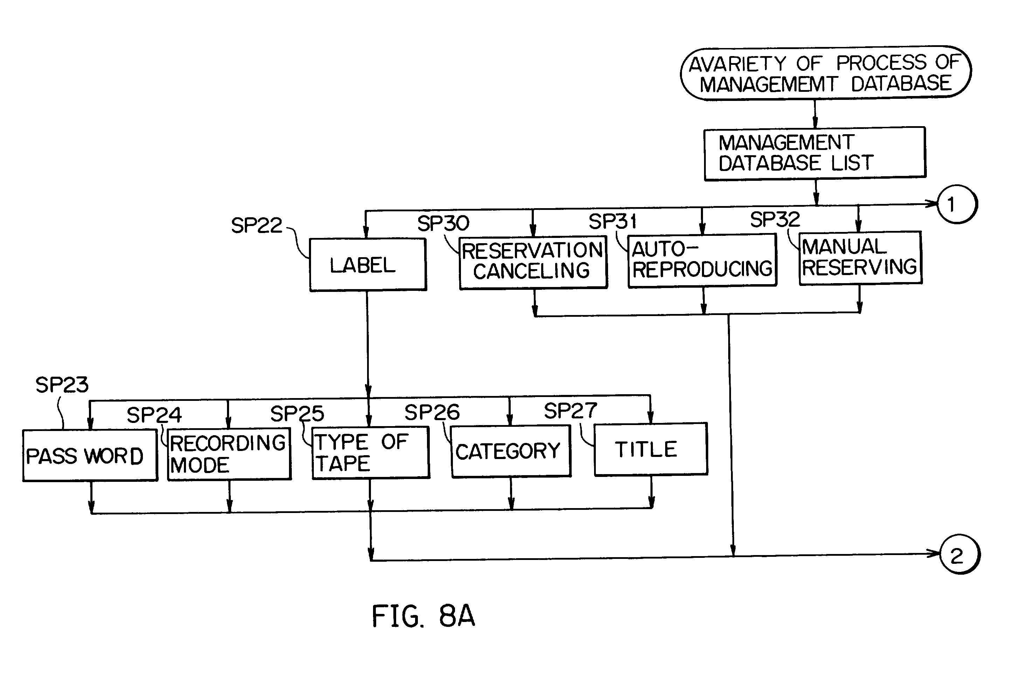

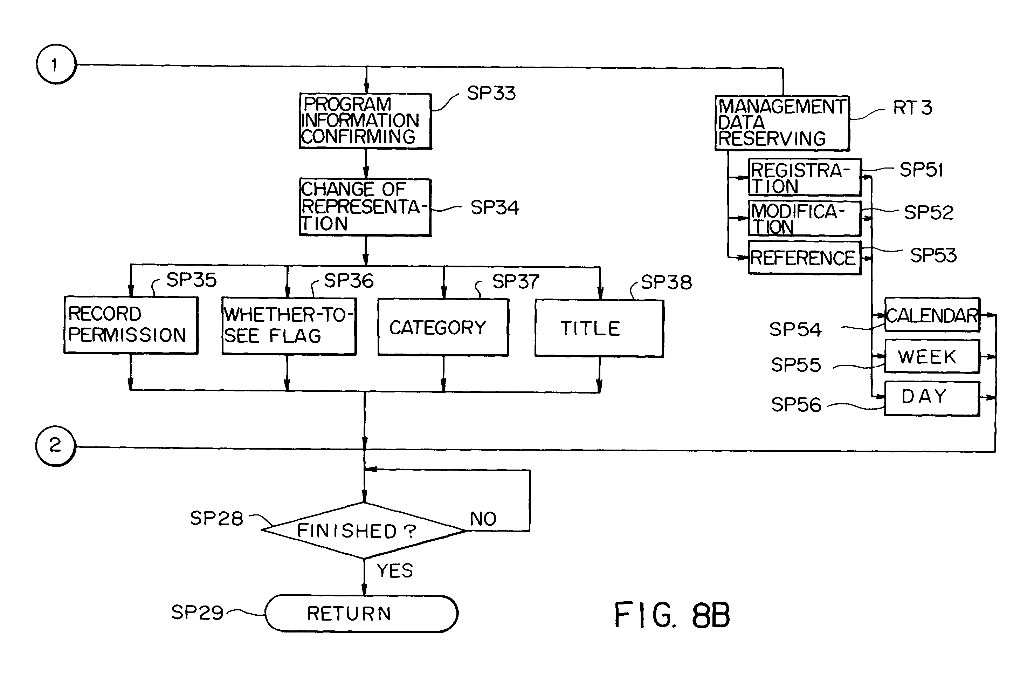

When entering a multiprocess routine RT1, as illustrated in FIG. 8, at a step SP21 the CPU 8 causes the remote controller 6 and the monitor 4 to display the management database list on the display screens 6A and 4A. After this step, the CPU 8 is brought into the instruction waiting status.

Displayed at this time on the display screens are items such as [label], [reservation canceling], [auto-reproducing], [manual reserving], [program information confirming] and [management data reserving]. In this state, one of the items can be specified.

The item [label] herein represents the operation mode in which to selectively set either the volume information or the program information which is contained in the volume information block D_{VM} or the program information block D_{PR} (FIG. 4) among the management data D_{AV}. Displayed on the display screens are the items such as [password], [recording mode], [type of tape], [category] and [title], when clicking the item [label] at a step SP22. In this state, one of the items is selectable.

When the user clicks the item [password], at a step SP23 the CPU 8 permits the user to rewrite the password data recorded in the item A11 of the volume information D_{VMX} (FIG. 5).

Similarly, at a step SP24 the CPU 8 specifies the record/operation mode recorded in the item B8 of the program information D_{PRX} (FIG. 6). As a result, the record mode data thereof can be written.

At a step SP25, the CPU 8 works to rewrite tape type data among the data indicating type of the video cassette which are recorded in the item A10 of the volume information D_{VMX} (FIG. 5).

At a step SP26, the CPU 8 works to rewrite the category code data recorded in the item B6 of the program information D_{PRX} (FIG. 6).

Besides, at a step SP27 the CPU 8 works to rewrite the title data recorded in the item B2 of the program information D_{PRX} (FIG. 6).

In this way, the CPU 8 rewrites the items ranging from [password] to [title] at the steps SP23 through SP27. Subsequent to these steps, when specifying the item [end] at a step SP28, the processes of the management database are finished. From the step SP29 the process returns to the management database processing loop shown in FIG. 7, wherein the process of the step SP8 resumes.

In contrast with this, at the step SP21 of FIG. 8 the user clicks the item [reservation canceling] in the instruction waiting status where the management data list is displayed. At this time, the CPU 8 cancels the reservations of all the programs recorded in the relevant management data list at a step SP30.

When the user clicks the item [auto-reproducing], at a step SP31 the CPU 8 functions to reproduce the reproducing order data of the item A13 of the volume information D_{VMX} (FIG. 5) in the predetermined order and, if necessary, to rewrite the data.

When the user clicks the item [manual reservation], the CPU 8 sequentially receives manual setting with respect to a predetermined number of programs. Then, the CPU 8 inputs them as management data.

After finishing the processes of steps SP30, SP31 and SP32, the CPU 8 reverts to the management database processing loop (FIG. 7), passing through the steps SP28 and SP29.

The CPU 8, when being in the instruction waiting status for displaying the management data list at the step SP21 of FIG. 8, initiates the process of a step SP33 after the user has clicked the item [program information confirming]. The representation on the display screen is changed over at a step SP34. At a step SP35 or SP36 or SP37 or SP38, there comes such a display mode as to confirm or rewrite the recorded contents of the items [record permission], [whether-to-see flag], [category] and [title] of the program information D_{PRX} (FIG. 6) and the volume information D_{VMX} (FIG. 5).

In this embodiment, predetermined pictorial representations, i.e., characters are employed as the data of the items [record permission], [whether-to-see flag], [category] and [title]. It is therefore possible to confirm and modify the information recorded in association with a plurality of reserved programs in a relatively narrow display area.

After finishing the processes of the steps SP35 to SP38, the CPU 8 returns via the steps SP28 and SP29 to the management database processing loop (FIG. 7).

In the instruction waiting status where the management data list is displayed, the user clicks the item [management data reserving]. Then, the CPU 8 enters a management data subroutine RT3. In this subroutine RT3, the CPU 8 executes a management data reservation processing procedure RT31, shown in FIG. 9, for switching the reservation mode, the procedure RT31 constituting a part of the processing procedures thereof.

At this time, the CPU 8 causes the user to select a timer reservation mode at a step SP41.

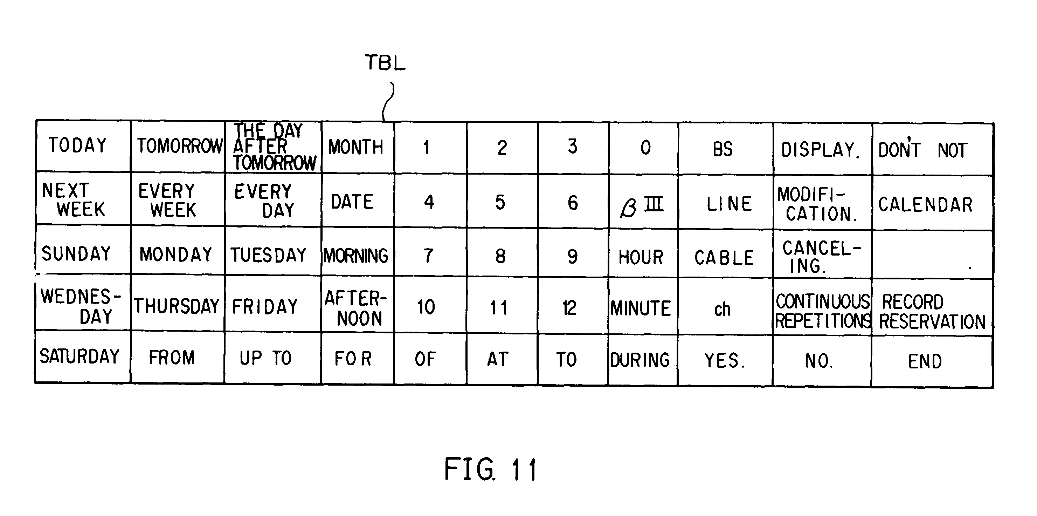

In accordance with this embodiment, there is provided a specified item list submittable for causing the user to selectively designate the specified item of the management data. Prepared, as illustrated in FIG. 11, is a language specified item list TBL consisting of language input items in which the specified items are expressed by natural language. Prepared also is a graphic specified item list consisting of graphic input items in which the specified items are, as in the ordinary way, expressed by graphic elements such as Roman alphabets, numerals and symbols. The CPU 8 causes the user to selectively specify any one of the language input and the graphic input for the reservation screen to be used.

As a result, if the language input is selected, the CPU 8 moves to a step SP42. Subsequently, the CPU 8 takes, in a register 44, the data corresponding to the language input item specified by the user while displaying the language specified item list TBL on the display screen.

Whereas if the graphic input is selected, the CPU 8 moves to a step SP43. Subsequently, the CPU 8 takes, in the register 44, the data corresponding to the graphic input item specified by the user while displaying the graphic specified item list on the display screen.

The specifying input operation of the user has thus been terminated. The CPU 8 finishes the management data reservation input process and reverts to the management database processing loop of FIG. 8.

At this time, the CPU 8 works to subsequently display items such as [registration], [modification] and [reference] on the display screen. At steps SP51 to SP53, the user clicks the item [registration] or [modification] or [reference]. In consequence, the CPU 8 launches into the process to execute this item.

On the occasion of processing the item clicked, a calendar reservation table, a one-week reservation table and a one-day reservation table are displayable according to the selection by the user at steps SP54 through SP56. A start time or an end time of the program reserved is written in the calendar reservation table or the one-week reservation table or the one-day reservation table.

The CPU 8, after finishing such processes, terminates the processing program of the management database at the step SP28. The CPU 8 returns to the management database processing loop (FIG. 7) from the step SP29.

In the initial instruction waiting status of FIG. 7, the processes discussed above are those to record the management data on the video tape,modify the same data and confirm the same data by clicking the item [management database] at the step SP6. In the initial instruction waiting status, however, if the user clicks other specified item [system setting] or [preference setting] or [timer reserving], the CPU 8 executes a process to set operating conditions of respective units of the VTR 1.

More specifically, the user clicks the item [system setting] at a step SP61. Displayed on the display screen in this case are items such as [present time], [good-night timer], [recording mode], [noise erasing], [BS on-line], [auto-setting], [tuner preset] and [line input]. These items are clicked at steps SP62 through SP69. The operating conditions of the individual units of the system can thereby be set. After finishing such a setting process, the CPU 8 terminates the processes of the system setting processing loop and moves to the above-mentioned step SP10.

At a step SP71, the item [preference setting] is clicked through the CPU 8. Displayed on the display screen at this time are items such as [screen display], [management database], [user set], [character], [timer reserving], [user level], [message] and [voice]. These items are clicked at steps SP72 through SP79. At this time, the CPU 8 executes the process of the respective items concerned. The CPU 8, when finishing the relevant processes, shifts to the above-described step SP10.

Besides, in the initial instruction waiting status, the user clicks the item [timer reserving] at a step SP81. Then, the CPU 8 displays the items [registration], [modification] and [reference] on the display screen. When the user clicks the respective items at steps SP82 through SP84, the items [calendar reservation table], [one-week reservation table] and [one-day reservation table] are displayed on the display screen. Subsequently, when the user specifies one of these items, the CPU 8 words to display the calendar reservation table, the one-week reservation table or the one-day reservation table at a step SP85, SP86 or SP87. The program is then reserved with the aid of the reservation table displayed.

The CPU 8, after finishing the timer reservation processing loop, moves to the step SP10.

The CPU 8 executes the input information processing program RT0 of FIG. 7 in the manner. Hence, it is feasible to surely control the VTR unit 3 on the basis of the input data inputted by the user.

### (5) [Whether-to-see] Confirming Operation of Recorded Contents

The user observes the contents by reproducing a predetermined recorded program. Thereafter, the remote controller 6 or the keyboard 12 is constructed to rewrite [whether-to-see flag information] into an ON state (i.e., logic [1]), this information being provided in each flag of the item B3 of the program information D_{PRX} corresponding to the relevant recorded program.

In the recorded program which underwent even one reproducing process by the user in the past, [whether-to-see flag information] corresponding to this program is rewritten into the ON state. The CPU 8 detects this [whether-to-see flag information], thereby providing the user with the information indicating whether or not each recorded program was reproduced in the past.

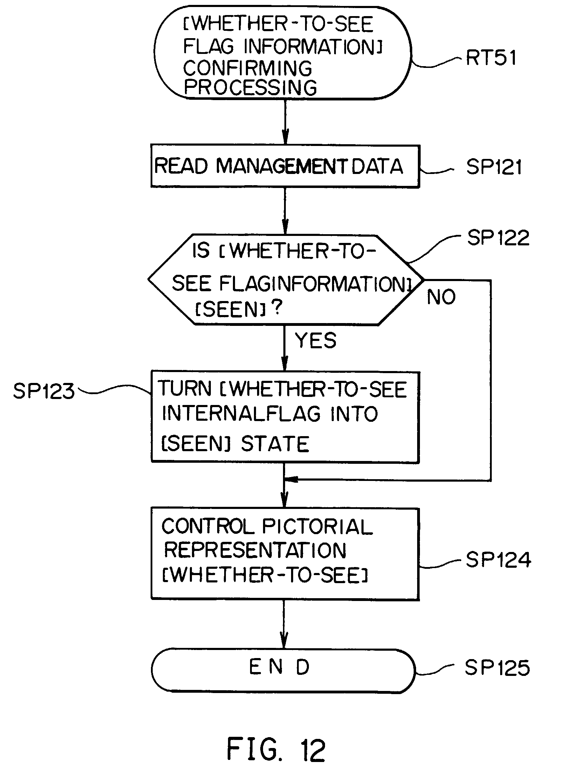

To be specific, a [whether-to-see flag information] confirming procedure RT51 shown in FIG. 12 represents a [whether-to-see flag information] confirming processing in the input information process and the management database setting process of FIGS. 7 and 8. Road at a step SP121 is the management data D_{AV} (FIG. 4) recorded in the management database video track recording region F_{AVV} or the management database audio track recording region F_{AVA} of the video tape 36 loaded at the step SP7 of FIG. 7. After this step, the data D_{AV} is temporarily stored in a register 44 (FIG. 1). At a subsequent step SP122, the process of the step SP36 shown in FIG. 8 is executed. There is made a judgement as to whether or not [whether-to-see flag information] of the 4th bit of [various flags] assumes the ON state (viz., a [seen] state), the foregoing flag information being recorded as the item B3 of the program information D_{PRX} (FIG. 6) corresponding to the program to be confirmed from the management data D_{AV} stored therein.

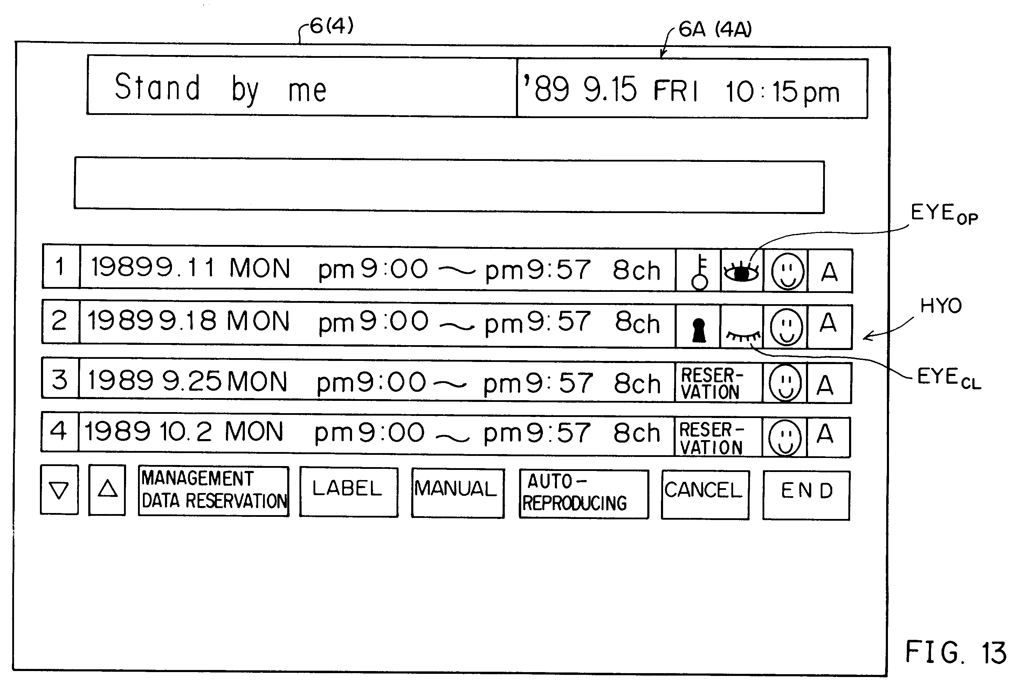

If the answer obtained is negative, this implies that the recorded program corresponding to [whether-to-see flag information] was not reproduced once in the past. The CPU 8 jumps over a step SP123. FIG. 13 illustrates graphic representations HY0 displayed on the display screens 4A and 6A. Displayed at the right end at a step SP124 is a pictorial representation EYE_{CL} depicting an eye closed with respect to a present readout program among the representations HY0.

Whereas if affirmative, this implies that the recorded program presently read out was reproduced in the past. The CPU 8 moves to a step SP123 turns ON a [whether-to-see] internal flag (i.e., controls this flag into the [seen] state) incorporated in the VTR unit 3. At a subsequent step SP124, a pictorial representation EYE_{OP} depicting an eye opened is displayed in the display column of the program concerned.

Hence, the user confirms the pictorial representation EYE_{CL} or EYE_{OP} displayed based on [whether-to-see flag information] with respect to the recorded program from the display columns of the respective recorded programs indicated in the graphic representations HYO. The user is therefore able to discern whether or not the relevant program was reproduced once in the past. After confirming such [whether-to-see flag information], the CPU 8 shifts to the step SP28 of FIG. 8. The processing operation comes to an end at a step SP126.

The first and second registered programs have already been recorded in, e.g., FIG. 12. If the user has seen the contents of the first recorded registered program in the past (i.e., the relevant recorded program was reproduced before), the open-eye pictorial representation EYE_{OP} is displayed in the display column of the first registered program. It is therefore feasible to confirm that the user has seen the contents in the past without performing such a complicated action as to confirm the reproduced contents.

If the user did not see the recorded contents of the second recorded registered program (i.e., the relevant recorded program was not reproduced before), the eye-closed pictorial representation EYE_{CL} is displayed in the display column of the second recorded registered program. From this representation, the user can make sure that the user did not yet see the second recorded registered program.

Thus, the user is able to discern whether or not the user has seen the contents recorded on the video tape 36 on the display screens 4A of the monitor 4 or and the display screen 6A of the remote controller 6 simply by loading the tape 36 into the VTR unit 3.

Read is the management data D_{AV} (FIG. 4) recorded in the management database video track recording region F_{AVV} or the management database audio track recording region F_{AVA} of the video tape 36 by virtue of the construction described above. Based on [whether-to-see flag information] stored in a variety of flags of the item B3 in the management data D_{AV}, the user can discern whether or not the user has seen the relevant recorded program in the past without reproducing the program recorded on the video tape 36. This confirmation involves the step of displaying the eye-opened pictorial representation EYE_{OP} or the eye-closed pictorial representation EYE_{CL} of the graphic representations HY0 on the display screen 4A of the monitor 4 or the display screen 6A of the remote controller 6.

### (6) Other Embodiments of First Embodiment

(6-1) The embodiment discussed above has dealt with a case of using the eye-closed pictorial representation EYE_{CL} and the eye-opened pictorial representation EYE_{OP} which indicate states of [whether-to-see flag information]. The present invention is not, however, limited to this pictorial representation. Other various pictorial representations and character representations are usable.
(6-2) The embodiment discussed above has dealt with a case where the user, whenever watching the recorded program, manually changes over [whether-to-see flag information] to the ON state. The present invention is not, however, limited to this changeover method. Other various methods are usable, wherein, for example, [whether-to-see flag information] is automatically rewritten into the ON state when reproducing more than 70 % of the content of one recorded program.
(6-3) The embodiment discussed above has dealt with a case of visually displaying [whether-to-see flag information]. The present invention is not, however, limited to this display mode. This flag information may be shown, e.g., by voices or the like.
(6-4) In the above-described embodiment, the management data D_{AV} is configured such that the volume information block D_{VM} and the program information blook D_{PR} are written sequentially from the top position of the recording track. Instead, however, the block arranging order may be interchanged. A variety modifications may be effected, wherein fine sectioning is done for intermixing as the case may be.
(6-5) The embodiment discussed above has dealt with a case where this invention is applied to the VTR. Instead, however, this invention is similarly applicable to other various recording/reproducing apparatus, wherein an audio signal is recorded as in the way with a so-called radio cassette.

### [2] Second Embodiment

In the second embodiment, the VTR 1 is constructed described below, adding to the construction of the first embodiment.

### (1) Record Permission/Inhibition Processing Operation

The management data D_{AV} is recorded in the management database audio track recording region F_{AVA} or the management database video track recording region F_{AVV} of the video tape 36. Specified to [1] by the user is [record permission flag] corresponding to a predetermined program among [record permission flags] in [various flags] provided in the item B3 of the program information D_{PRX} corresponding to each program of the management data D_{AV}. In this record permission status, the CPU 8 permits the record of only the program in which [record permission flag] is controlled in the record permission status.

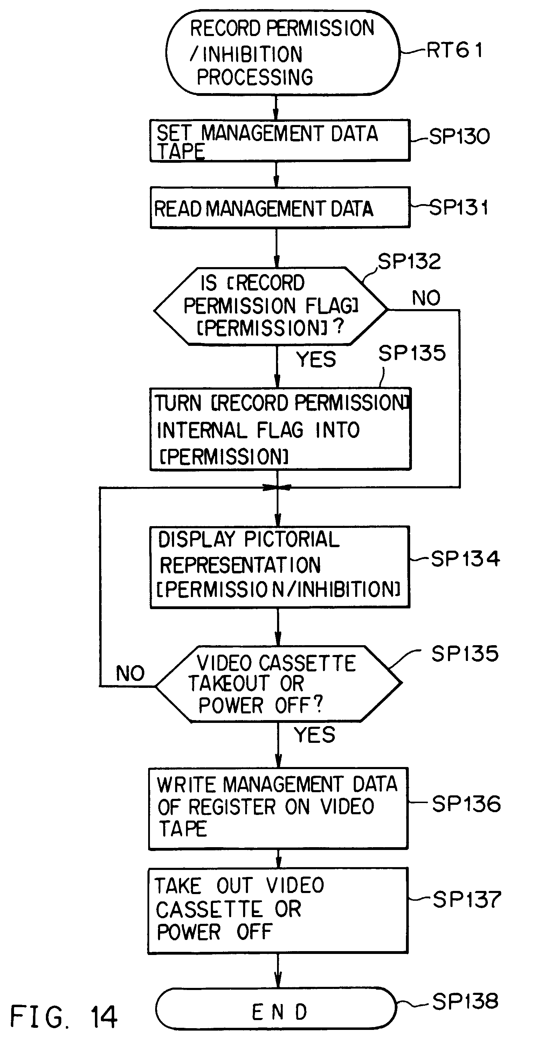

More specifically, a record permission/inhibition processing routine RT61 shown in FIG. 14 indicates record permission/inhibition processing operations in the input information process and the management database setting process which are shown in FIGS. 7 and 8. At a step SP130, the user loads the video cassette 35 in the VTR unit 3 (step SP7 of FIG. 7). At a step SP131, the CPU 8 sequentially reads pieces of program information D_{PRX} of the respective recorded programs recorded on the video tape 36 from the management data D_{AV} recorded on the video tape 36 of the video cassette 35. At a subsequent step SP132, the CPU 8 judges whether or not [record permission flag] provided in 3rd bit or various flags is in the ON state (i.e., [1] is specified to indicate [record permission status]) with respect to every recorded program by executing the process of the step SP35 shown in FIG. 8.

If the answer is negative, this implies that the recorded program corresponding to [record permission flag] concerned should not be erased. The CPU 8 jumps over a step SP133. At a step SP134, the CPU 8 works to display, in the display column of the relevant recorded program, a pictorial representation REC_{NO} indicating the record inhibition status of a present readout program among graphic representations HY0 of FIG. 13 on the display screens 4A and 6A.

Whereas if affirmative, this implies that a program may be newly recorded in the recording region of the recorded program that is now being processed (i.e., this program may be erased). The CPU 8, when moving to the next step SP133, changes over a [record permission] internal flag provided in the VTR unit 3 from an initial status, i.e., a [record inhibition] status to a [record permission] status. At a subsequent step SP134, a pictorial representation REC_{OK} indicating a record permission status is displayed in the display column of the relevant program.

Thus, the CPU 8 indicates whether to erase the respective programs recorded in the video tape 36 of the loaded video cassette 35 on the display screens 4A and 6A. At the same moment, the CPU 8 is arranged not to execute the record of a new program even when the user tries to record this new program in the recording region concerned. It is because the [record permission] internal flag corresponding to the relevant recorded program assume the record inhibition status in the recording region of the recorded program undergoing the erase inhibition.

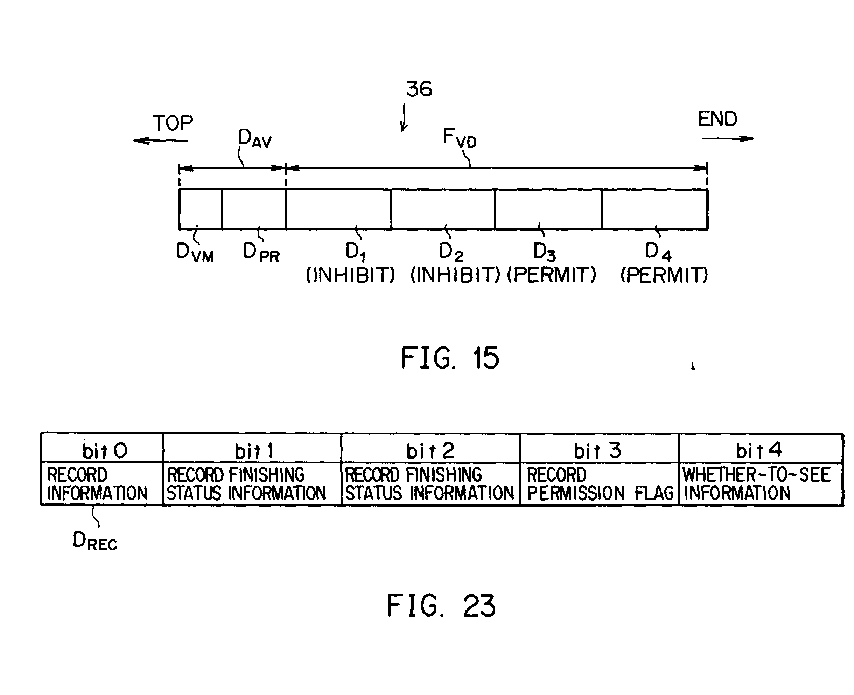

More specifically, as illustrated in FIG. 15, in [record permission flag] corresponding to each of the programs D₁ - D₄ recorded in a program information block D_{PR}, [record permission flags] corresponding to, e.g., the first and second programs D₁ and D₂ are in the inhibition status. In this case, the programs D₁ and D₂ are controlled in the record inhibition status (viz., an erase inhibition status). New programs are not recorded in the regions of the programs D₁ and D₂ recorded in [start addresses] of the program information D_{PRX} corresponding to the programs D₁ and D₂ on the basis of the start positions of these regions.

Hence, when the user makes an attempt to record new programs on the video tape 36, the regions of the programs D₃ and D₄ which are allowed to be recorded are detected based on [start addresses] of the program D₃ and D₄. Thereafter, the new programs are recorded in the recording regions D₃ and D₄.

The CPU 8 shifts to a step SP135 to execute the process of the step SP10 of FIG. 7. In consequence of this, the user waits for a take-out instruction of the video cassette 35 or a power-OFF instruction. After executing the instruction, the CPU 8 moves to a subsequent step SP136. The management data stored in the register 44 is written to the management database video track recording region F_{AVV} or the management database audio track recording regions F_{AVA} of the video tape 36. Thereafter, at a step SP137 the CPU 8 executes the take-out action of the video cassette 35 or the power-OFF action in conformity with the user's instruction. At a step SP138, the record permission/inhibition processing mode is terminated.

In this manner, the user is able to confirm the program region In which the program may be erased or should not be erased on the display screens 4A and 6A. The new program may be recorded in the erase permission program region alone.

Based on the configuration discussed above, the management data D_{AV} (FIG. 4) is recorded in the management database video track recording region F_{AVV} or the management database audio track recording region F_{AVA} of the video tape 36. In the management data D_{AV}, the record permission/inhibition (i.e., erase permission/inhibition) information is recorded as the program information in association with every program recorded on the video tape 36. When setting the video tape 36 in the VTR unit 3, the foregoing information is read to visually display the record permission/inhibition region. Simultaneously, the new program can be inhibited from being recorded in the record inhibition region.

With this arrangement, the record (erase) permission or inhibition mode can be specified for each of the plurality of programs recorded on the video tape 36.

### (2) Other Embodiments of Second Embodiment

(2-1) The embodiment discussed above has dealt with a case of using the pictorial representation REC_{OK} and REC_{NO} shown in FIG. 13, indicating a status of the record permission flag. The present invention is not, however, limited to this pictorial representation. Other various pictorial representations and character representations are usable.
(2-2) The embodiment discussed above has dealt with a case where a status of the record permission flag is visually displayed. The present invention is not, however, limited to this visual display. The flag status may be indicated by voices or the like.
(2-3) The embodiment discussed above has dealt with a case where the user manually controls the record permission flag in the record permission or inhibition status. The present invention is not, however, limited to this control method. Other methods of controlling the record permission flag are available, wherein, for instance, the record permission flag is automatically controlled in the record permission status with respect to the program that was once reproduced.
(2-4) In the above-described embodiment, the management data D_{AV} is configured such that the volume information block D_{VM} and the program information block D_{PR} are written sequentially from the top position of the recording track. Instead, however, the block arranging order may be interchanged. A variety modifications may be effected, wherein fine sectioning is done for intermixing as the case may be.
(2-5) The embodiment discussed above has dealt with a case where this invention is applied to the VTR. Instead, however, this invention is similarly applicable to other various recording/reproducing apparatuses, wherein an audio signal is recorded as in the way with a so-called radio built-in cassette tape recorder.

### [3] Third Embodiment

### (1) Record Permission/Inhibition Processing Operation

In the third embodiment, the management data D_{AV} is recorded in the management database audio track recording region F_{AVA} or the management database video track recording region F_{AVV} of the video tape 36. The user specifies, in a record inhibition status, [record inhibition flag] among [various flags] provided in the item A9 of the volume information D_{VMX} of the management data D_{AV}. The CPU 8 controls the video tape 36 of the video cassette 35 in the erase inhibition status with priority to a condition of the mis-erase preventive pawl provided in the box member of the video cassette 35.

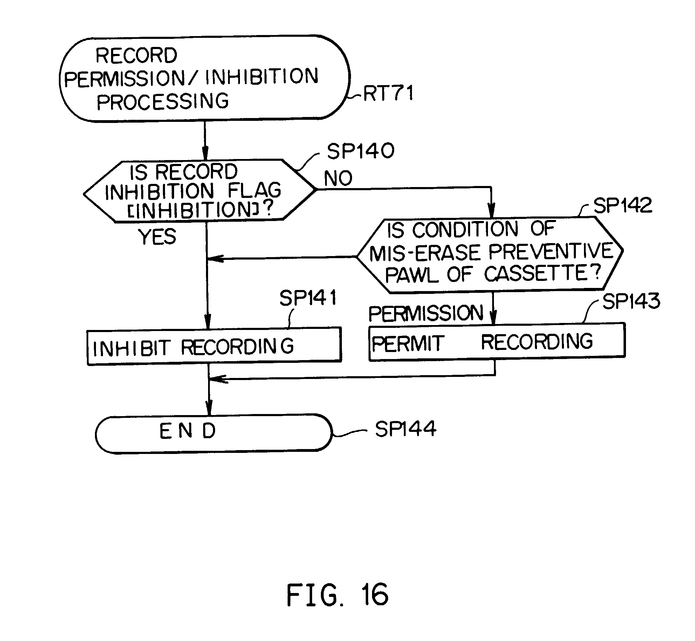

More specifically, when the user executes performs the record or record reservation of the VTR 1, the CPU 8 for processing the control data detects the condition of the mis-erase preventive pawl of the loaded video cassette 35 with the aid of a mechanism control CPU 11. The CPU 8 executes a record permission/inhibition processing routine RT71 shown in FIG. 16. Then, the CPU 8 judges whether the program may be recorded or not.

Namely, the record permission/inhibition processing routine RT71 indicates a record permission/inhibition processing operations in the input information process and the management database setting process which are shown in FIG. 7 and 8. At a step SP140, the management data D_{AV} recorded on the video tape 36 is read by executing the process of the step SP35 of FIG. 8. There is made a judgement as to whether or not [record inhibition flag] contained in [various flags] is in the inhibition status from the volume information D_{VMX} of the management data D_{AV}.

If the answer is herein affirmative, this implies a status where the program should not be newly recorded on the video tape 36 (i.e., the programs recorded on the video tape 36 should not be erased). At a subsequent step SP141, the CPU 8 controls the VTR unit 3 in the record inhibiting status. Thereafter, the action moves to the step SP28 of FIG. 8, and this processing routine comes to an end at a step SP144.

Whereas if the answer is negative at a step SP140, this implies a status where the program may be newly recorded on the video tape 36 (i.e., the program recorded on the video tape 36 may be erased). At this time, the CPU 8 shifts to a step SP142. The CPU 8 discerns whether a condition of the mis-erase preventive pawl provided in the box member of the video cassette 35 is in the erase inhibition status (viz., the pawl is broken off) or in the erase permission status (i.e., the pawl is unbroken). If turned out to be the erase inhibition status, the CPU 8 shifts to the above-mentioned step SP141 to control the VTR unit 3 in the record inhibition status.

Whereas if turned out to be the erase permission status, the CPU 8 shifts to a subsequent step SP143 to control the VTR unit 3 in the record permission status. The action moves to the step SP28 of FIG. 8, and the processing operation concerned is terminated at the next step SP144.

If the record inhibition flag of the management data D_{AV} recorded on the video tape 36 assumes the record inhibition status, the CPU 8 controls the VTR unit 3 in the record inhibition status irrespective of a condition of the mis-erase preventing pawl provided in the box member of the video cassette 35.

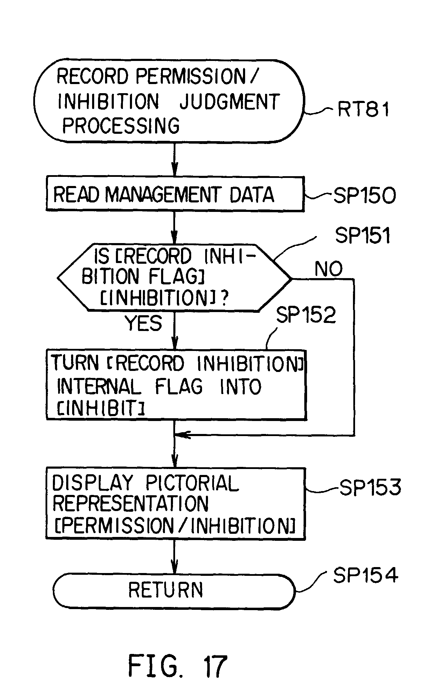

When judging a status of the record inhibition flag at the step SP140, the CPU 8 executes a record permission/inhibition judgement processing routine RT81 shown in FIG. 17.

That is, at a step SP150 the CPU 8 reads the management data D_{AV} recorded on the video tape 36 of the video cassette 35 loaded into the VTR unit 3. At a subsequent step SP151 the CPU 8 judges whether or not [record inhibition flag] contained in [various flags] assumes an inhibition status from within the volume information D_{VMX} of the management data D_{AV}.

If the answer is affirmative, the implies a status in which the program recorded on the video tape 36 should not be erased (i.e., the program should not be newly recorded on the video tape 36). A [record permission] internal flag of the VTR unit 3 is provided in each program recorded on the video tape 36. At the next step SP152, the CPU 8 changes over this [record permission] internal flag from the [record permission] status defined as an initial status to a [record inhibition] status. At a subsequent step SP153, a pictorial representation showing the record inhibition status is displayed on the display screens 4A and 6A.

Whereas if negative, this implies that the program may be newly recorded in a region where the program has been recorded on the video tape 36 (viz., the program recorded on the video tape 36 may be erased). The CPU 8 jump over a step SP152. At a step SP153, a pictorial representation showing the record permission status is displayed on the display screens 4A and 6A.

Thus, the CPU 8 indicates whether all the programs recorded on the video tape 36 of the loaded video cassette 35 may be erased or not on the display screen 4A and 6A. Even when the user tries to record a new program on the video tape 36, the CPU 8 functions, if erase-inhibited, so as not to execute this action.

The CPU 8 returns to the step SP140 of the record permission/inhibition processing routine RT71 (FIG. 16) after shifting to a step SP154.

Hence, the user is capable of discerning whether the management data D_{AV} of the video tape 36 of the loaded video cassette 35 assumes the record permission status or the record inhibition status on the display screens 4A and 6A. In the case of the record permission status, the program can be newly recorded.

Based on the construction discussed above, the record inhibition status (i.e., the erase inhibition status) is specified by the management data D_{AV} with the priority to a condition of the mis-erase preventive pawl set in the box member of the video cassette 35. On the bases of the management data D_{AV}, the record inhibition can be specified with other operations such as a record reservation. The operability of the user can be further improved, and at the same time the mis-erasing can be prevented with a certainty.

### (2) Other Embodiments of Third Embodiment

(2-1) The embodiment discussed above has dealt with a case of confirming a condition of the mis-erase preventive pawl provided in the box member of the cassette 35 when the record inhibition flag is in the record permission status. This invention is not, however, limited to this method. The record permission or inhibition may be specified depending on only a status of the record inhibition flag according to the necessity.

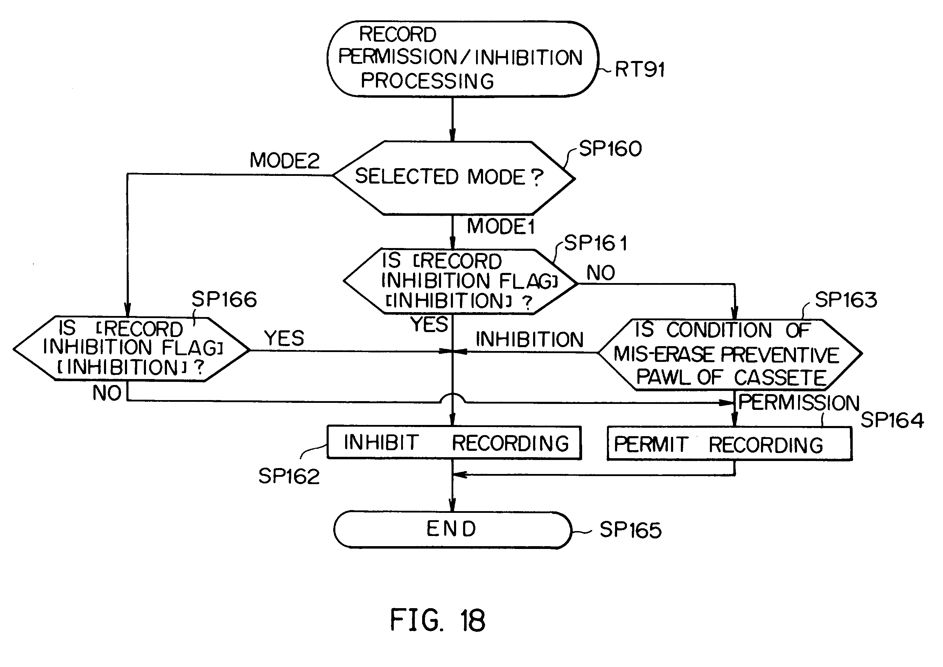

In this case, a record permission/inhibition processing routine RT91 shown in FIG. 18 is executed. As a result, there may be selected a processing mode which takes the mis-erase preventive pawl into consideration or a processing mode depending on only a status of the record inhibition flag.

When the processing mode 1 is herein selected, at subsequent steps SP161 through SP164 the CPU 8 executes the same processes as those of the steps SP140 through SP143 (FIG. 16). The CPU 8 thus controls the VTR unit 3 in the record permission or inhibition status. At a step SP165, the processing routine RT91 is finished.

When the processing mode 2 is selected at the step SP160, the CPU 8 shifts to a step SP166. The CPU 8 judges whether or not the record inhibition flag assumes the record inhibition status be executing the same process with the step SP140 (FIG. 16). If an affirmative result is obtained, the CPU 8, after moving to a step SP162, controls the VTR unit 3 in the record inhibition status. Thereafter, the action moves to the step SP28 shown in FIG. 8, and the processing routine RT91 is terminate at a step SP165.

Whereas if negative, the CPU 8, after shifting to the step SP164, controls the VTR unit 3 in the record permission status. Then, the action moves to the step SP28 of FIG. 8, and the processing routine RT91 comes to an end at a step SP165.

Hence, when selecting the processing mode 2, the CPU 8 is capable of controlling the VTR unit 3 in the record permission (i.e., erase permission) or the record inhibition (viz., erase inhibition) depending not on a condition of the mis-erase preventive pawl proceeded in the box member of the video cassette 35 but on only the status of the record inhibition flag. For instance, the mis-erase preventive pawl of the video cassette 35 is broken off, with the result that the cassette 35 is brought into the erase inhibition status. In this case also, the record inhibition flag of the management data D_{AV} recorded on the video tape 36 of the video cassette 35 is changed into the record permission status. In consequence, the program is recordable on the video tape 36.

(2-2) The embodiment discussed above has dealt with a case where a status of the record inhibition flag is visually displayed. The present invention is not, however, limited to this visual display. The flag status may be indicated by voices or the like.

(2-3) In the above-described embodiment, the management data D_{AV} is configured such that the volume information block D_{VM} and the program information block D_{PR} are written sequentially from the top position of the recording track. Instead, however, the block arranging order may be interchanged. A variety of modifications may be effected, wherein fine sectioning is done for intermixing as the case may be.

(2-4) The embodiment discussed above has dealt with a case where this invention is applied to the VTR. Instead, however, this invention is similarly applicable to other various recording/reproducing apparatuses, wherein an audio signal is recorded as in the way with a so-called radio built-in cassette tape recorder.

### [4] Fourth Embodiment

### (1) Outside Unit Control Process

In the fourth embodiment, the CPU 8 for processing the control management data takes [reserved record control information] Into the item B11 (FIG. 6) of the management data D_{AV} with the aid of a user's manual input at the step SP32 of FIG. 8. At the step SP9 (FIG. 7), [reserved record control information] is written to the management data D_{AV} of the management database video track recording region F_{AVV} or the management database audio track recording region F_{AVA} of the video tape 36.

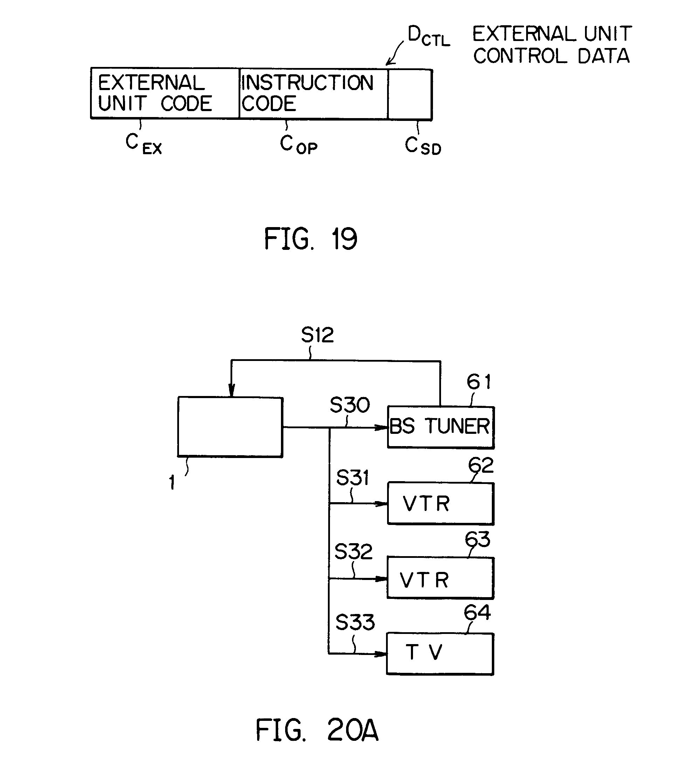

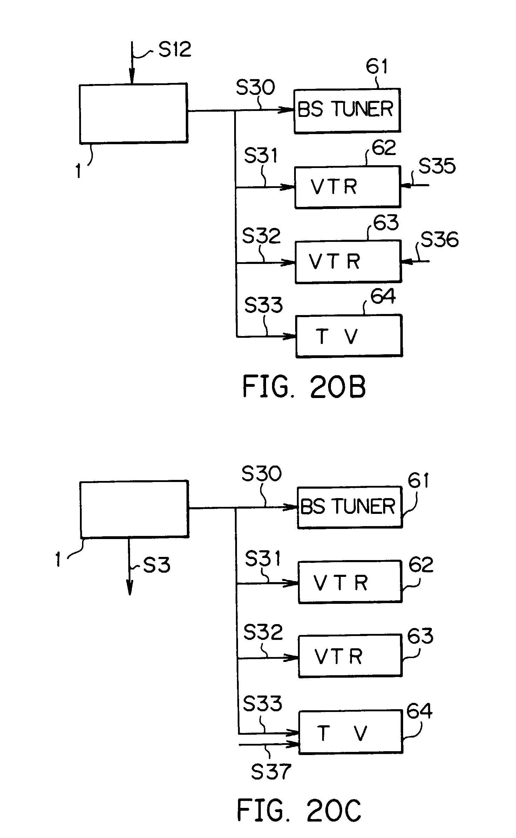

The external unit control data D_{CTL} indicating [reserved record control information] is, as illustrated in FIG. 19, composed of an external unit code C_{EX}, an instruction code C_{OP} and a transmission code C_{SD}. The external unit code C_{EX} consists of code signals for specifying peripheral units connected to the video tape recorder 1. The peripheral units include, as illustrated in FIG. 20, e.g., a BS tuner 61, video tape recorders (VTR) 62, 63 and a television receiver (TV) 64. The transmission code C_{SD} consists of discerning data for discerning the control for reserved record starting from the control for reproducing.

The video cassette 35 to which the management data D_{AV} is written is loaded into the video tape recorder unit 3. In this state, the user clicks an item [management database] (SP73) in [preference setting] (SP71) shown in FIG. 7. At this time, the CPU 8 for processing the control management data of the video tape recorder 1 takes the management data D_{AV} recorded on the video tape 36 into a management data memory of a register 44. This process is performed via a magnetic head 34, an electromagnetic converting circuit 33, a reproducing circuit 37, a reproduction switching circuit 38, an image recording decoder 52 and a bus 9.

The control management data processing CPU 8 finishes inputting the management data D_{AV}. Based on the management data D_{AV} read from the management data memory of the register 44, a reserved record starting time is read per program. The CPU 8 judges that the present time reaches the reserved record starting time of each program. Based on the external outside unit control data D_{CTL} shown in FIG. 19, the CPU 8 works to transmit the control signals S30 - S33 to the BS tuner 61, the VTRs 62, 63 and the TV 64 which are connected to the video tape recorder 1.

The external unit control data D_{CTL} is composed of the external unit code C_{EX}, the instruction code C_{OP} and the transmission code C_{SD}. In accordance with the transmission code C_{SD}, the control signals S30 - S33 are transmitted from the video tape recorder 1 when executing the reserved record or effecting the reproduction. With this arrangement, whether the BS tuner 61, the VTRs 62, 63 and the TV 64 are controlled or not is judged.

The control management data processing CPU 8 fetches plural pieces of external unit control data D_{CTL} corresponding to a first reserved record starting time from the transmission code C_{SD}. Transmitted to the BS tuner 61,the VTRs 62, 63 and the TV 64 are the control signals S30 - S33 composed of the external unit code C_{EX} and the instruction code C_{OP}.

The BS tuner 61, the VTRs 62, 63 and the TV 64, when receiving the control signals S30 - S33, examine the external unit code C_{EX}. When the inputted external unit code C_{EX} coincides with an intrinsic unit code, the instruction is executed.

The BS tuner 61, as shown in FIG. 20A, judges that the external unit code C_{EX} coincides with the intrinsic unit code assigned from the control signal S30 to the BS tuner 61. A power supply of the BS tuner 61 is controlled to be turned ON by the instruction code C_{OP}. A program is received by setting the receiving channel to, e.g., channel 15. At this time, the video tape recorder 1 takes in a video signal or external line video signal S12 of the program which is received by the BS tuner 61.

Thereafter, the video tape recorder 1 (FIG. 1) takes the external line video signal S12 into an input selecting circuit 23. The video signal S12 is recorded as a record video signal S1 on the video tape 36 through a superimpose fader circuit 24.

The CPU 8 fetches the external unit control data D_{CTL} corresponding to the recording time in a second reserved record starting time. As in the way described above, the control signals S30 - S33 are transmitted to the BS tuner 61, the VTRs 62, 63 and the TV 64.

As illustrated in FIG. 20B, the VTRs 62, 63 judge that the external unit codes C_{EX1} and C_{EX2} coincide with the intrinsic unit codes assigned to the VTRs 62, 63 from the control signals S31 and S32. After this judgement, the instruction codes C_{OP} and C_{OP2} function to turn ON a power supply circuit of the VTRs 62, 63. At this time, the VTRs 62, 63 receive video signals as external line signals S35 and S36 from external input terminals. This video signal consists of a receiving video signal S11 inputted via the tuner 21 to the video tape recorder 1 or an external line video signal S12. Recording of the video signals is started in accordance with the instruction codes C_{OP1} and C_{OP2}. As a result, the control management data processing CPU 8 causes the video tape recorder 1 to perform the recording process. Simultaneously, the video signals undergo dubbing by use of the VTRs 62, 63.

The CPU 8, when reproducing the recorded program, fetches the external unit control data D_{CTL} corresponding to the reproducing time of this program from the management data D_{AV}. As in the previous case, the control signals S30 - S33 are transmitted to the BS tuner 61, the VTRs 62, 63 and the TV 64.

The TV 64 judges, as illustrated in FIG. 20C, that the intrinsic unit code of the TV 64 coincides with the external unit code C_{EX} from the control signals S33. Based on the instruction code C_{OP}, a type of surround of the video signal inputted as an external line signal S37 and a volume of surround are controlled.

According to the construction described above, it is possible to control the external unit other than the video tape recorder 1 during the reserved recording or reproducing. The elaborate control can be done per program.

### (2) Other Embodiments of Fourth Embodiment

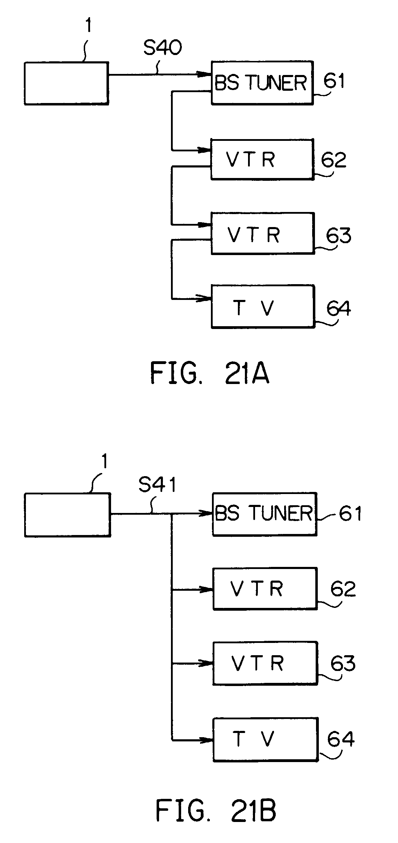

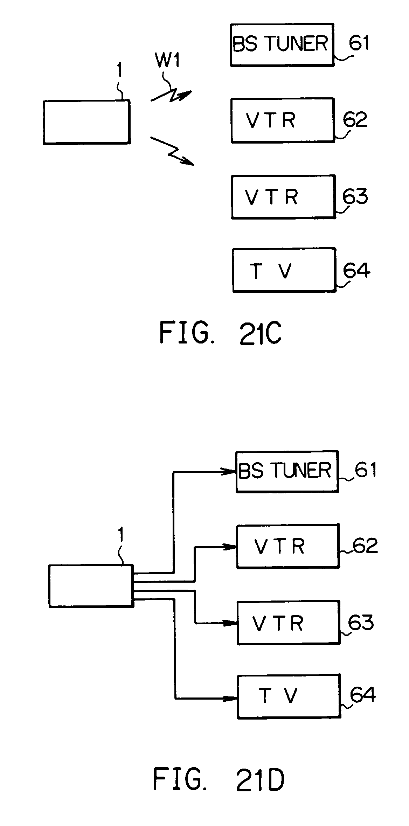

(2-1) The embodiment discussed above has dealt with the control to transmit the control signals S30 through S33 consisting of the same control information to the BS tuner 61, the VTRs 62, 63 and the TV 64 from the video tape recorder 1. According to the present invention, instead of this method, a control signals S40 may be, as depicted in FIG. 21A, taken in via the BS tuner 61, the VTRs 62, 63 and the TV 64.
(2-2) The embodiment discussed above has dealt with the control to transmit the control signals S30 through S33 consisting of the same information to the BS tuner 61, the VTRs 62, 63 and the TV 64 from the video tape recorder 1. According to this invention, instead of this method, a control signal S41 may be, as illustrated in FIG. 21B, taken in parallel.
(2-3) The embodiment discussed above has dealt with the control to transmit the control signals S30 through S33 consisting of the same information to the BS tuner 61, the VTRs 62, 63 and the TV 64 from the video tape recorder 1. According to this invention, instead of this method, the external unit control data D_{CTL} may be, as shown in FIG. 21C, transmitted in a non-contact state from the video tape recorder 1 to an electromagnetic wave W1 or the like.
(2-4) The embodiment discussed above has dealt with a case where the BS tuner 61, the VTRs 62, 63 and the TV 64 compare the external unit code C_{EX} with the intrinsic unit code to judge an instructive destination of the instruction code C_{OP}. According to the present invention, instead of this method, the instructive destination of the instruction code C_{OP} is, as shown in FIG. 21D, previously judged from the external unit code C_{EX} in the control management data processing CPU 8. The control may be effected in such a way that the instruction code C_{OP} is transmitted from the video tape recorder 1 to the external unit concerned.
(2-5) The embodiment discussed above has dealt with a case where the BS tuner 61, the VTRs 62, 63 and the TV 64 are connected as external units to the video tape recorder 1. This invention is not limited to this arrangement. This invention is applicable to a case where a plurality of external units execute a plurality of instructions.
(2-6) The embodiment discussed above has dealt with a case where the present invention is applied to the video tape recorder 1. This invention is not limited to this application but is widely applicable to information recording/reproducing apparatuses such as radio cassettes.

### [5] Fifth Embodiment

### (1) Recorded Flag Writing Process

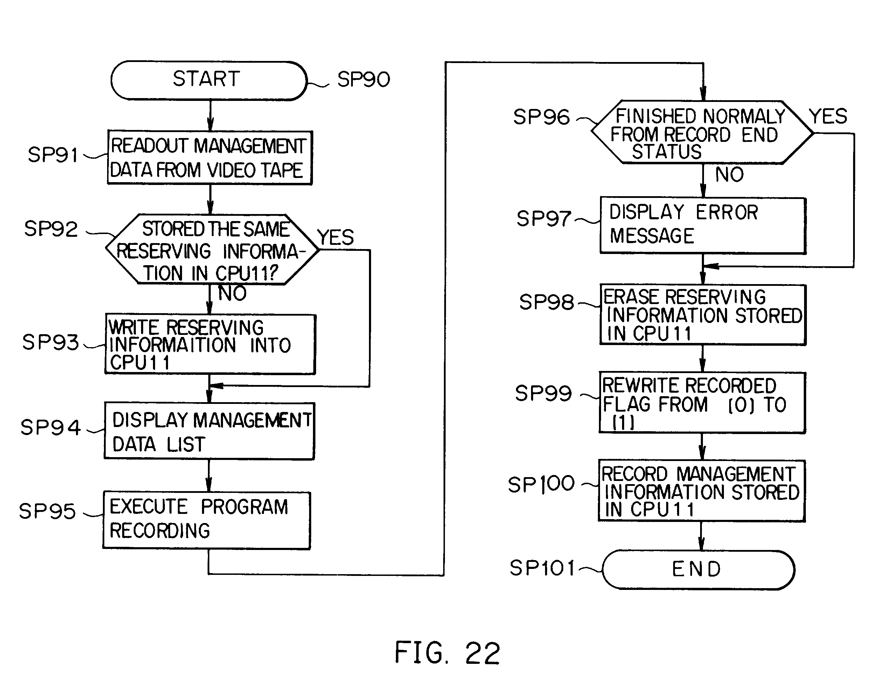

In the fifth embodiment, simultaneously when loading the video cassette 35 into the video tape recorder unit 3, a management data mode instruction key 6F of the remote controller 6 (FIG. 10) is switched ON. The control management data processing CPU 8 enters a management data D_{AV} readout mode at a step SP90 (FIG. 22). At a step SP91, the CPU 8 reads the management data D_{AV} into a register 44 from the management database video track recording region F_{AVV} or the management database audio track recording region F_{AVA} formed on the video tape 36. This readout process is effected through an electromagnetic converting circuit 33, a reproducing circuit 37, a reproducing switching circuit 38 and an image recording decoder 52.

Subsequently, at a step SP92 the CPU 8 judges whether or not a reservation memory incorporated into the video tape recorder unit 3 has stored the same reserving information as that written in [record start time] of the item B9 and [record end time] of the item B10 which constitute program information D_{PRX} (FIG. 6) among the management data D_{AV} read in to the register 44. If the answer is negative, at a step SP93 the reserving information of the register 44 is written as reserved record data to a reservation memory of a mechanism control CPU 11. The action moves to a step SP94.

Whereas if affirmative, (this implies that the reserving information written to the register 44 has already been written to the reservation memory of the mechanism control CPU 11), the control management data processing CPU 8 shifts from the step SP92 directly to a step SP94.

At the step SP94, the CPU 8 works to display pieces of reserving information of, e.g., four registered programs stored in the reservation memory of the CPU 11. The reserving information is, as depicted in FIG. 13, graphically displayed in the form of a list HY0 composed of graphic display elements arranged in line per program. A reservation status is thus indicated to the user.

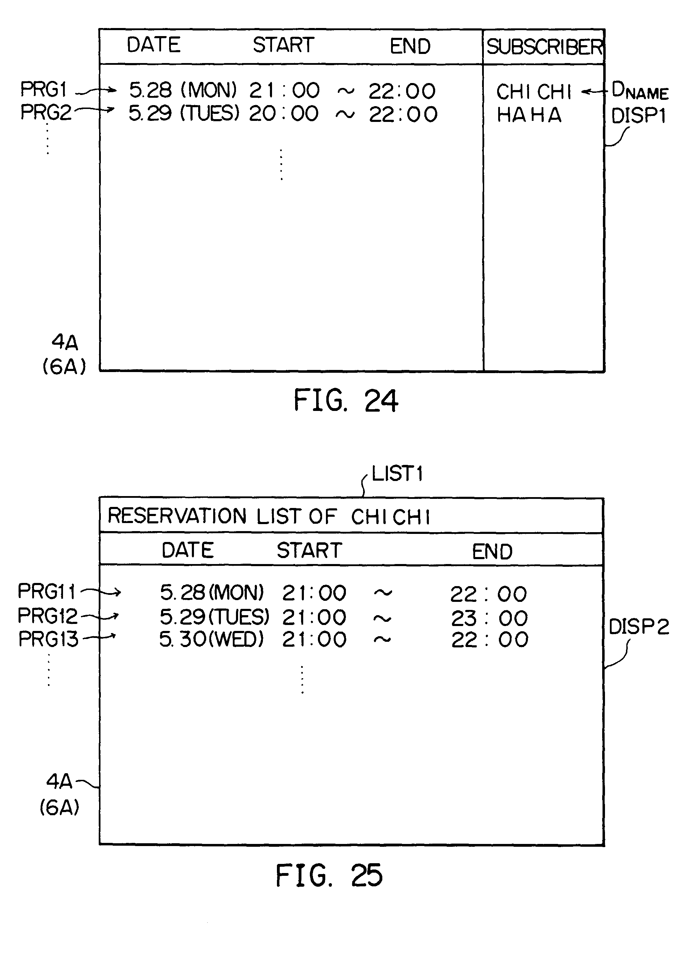

The present time reaches the record start time written to the register 44. At this time, the control management data processing CPU 8 executes program recording on the video tape 36 at a step SP95 with the aid of the mechanism control CPU 11. This recording is performed by transmitting control information S6 via a bus 10 to the video tape recorder unit 3. The record of this program is finished. Thereafter, the CPU 8 writes a result that the record concerned is finished normally or an abnormal state appears in first and second bits of [various flags] (FIG. 23) of the item B3 of the management data D_{AV} recorded in the register 44.

Subsequently, at a step SP96 the CPU 8 judges whether or not the record was finished normally from a record end status recorded in the item B3 of the management data D_{AV}. If an abnormality is caused during the record, at a step SP97 the CPU 8 indicates an error message on the display screen 4A of the monitor 4 and the display screen 6A of the remote controller 6. The action the moves to a step SP98.

Contrastingly, if the record is finished normally, the CPU 8 shifts from the step SP96 to the step SP98. The reserving information stored in the reservation memory of the CPU 11 is erased. At a step SP99, 0th bit data representing the recorded flag (FIG. 23) of the item B3 is rewritten from logic [0] data (indicating that the relevant program is now in the reserved status) into logic [1] data (indicating that the relevant program is now in the recorded status). This rewriting process is effected while holding [record start time] of the item B9 and [record end time] of the item B10 among the management data D_{AV} stored in the register 44. As a result, [record start time] and [record end time] defined as the reserving information are rewritten into [record start time] and [record end time] defined as the recorded information of the recorded program.

The user manipulates an eject key of the video tape recorder unit 3 to instruct the ejection of the video tape 36. At this time, the control management data processing CPU 8 functions to rewind the video tape 36 to a tape top position at a step SP100. Subsequent to this step, the CPU 8 records the management data D_{AV} stored in the register 44 in the management database video track recording region F_{AVV} formed on the video recording track TA, TB of the video tape 36. This recording process is executed through a recording encoder 51, an electromagnetic converting circuit 33 and the magnetic head 34.

The control management data processing CPU 8 ejects the video tape 36 at a step SP101, and the process concerned comes to an end.

Based on the construction discussed above, the recorded flag F_{REC} is, after finishing the record of the program, rewritten from the logic [0] data representing the reserved status to the logic [1] data representing the recorded status. It is therefore possible to divert [record start time] and [record end time] written as the reserving information, e.g., in the items B9 and B10 directly to [record start time] and [record end time] as the recorded information. Hence, there is no necessity for having the data region corresponding to each of the reserving information and the recorded information. Besides, the rewriting process of the data can be minimized. The data process can be simplified correspondingly.

### (2) Other Embodiments of Fifth Embodiment

(2-1) The embodiment discussed above has dealt with the control to manage [record start time] and [record end time], i.e., the record reserving information, as the recorded information in accordance with the recorded flag F_{REC}. The present invention is not, however, limited to this method. This invention is applicable to record reserving information such as [channel], [category], [title] and the like.
(2-2) The embodiment discussed above has dealt with a case where the reserving information exists at the step SP94. This invention is not limited to this case but may be applied to the following case. If the record is performed manually because of no reserving information, the data written to the management data memory of the register 44 through the CPU 8 is employed as the reserving information.
(2-3) In the embodiment discussed above, the management data D_{AV} is configured such that the volume information block D_{VM} and the program information block D_{PR} are written sequentially from the top position of the recording track. Instead, however, the block arranging order may be interchanged. A variety modifications may be effected, wherein fine sectioning is done for intermixing as the case may be.
(2-4) In the embodiment discussed above, the management database audio track recording region F_{AVA} is provided at the tape top part of the video tape 36. The insertion is not limited to this part but may be changed to other parts.
(2-6) The embodiment discussed above has dealt with a case where this invention is applied to the video tape recorder. Instead, this Invention is applied widely to electronic devices for consumer user such as a radio cassette or the like, whereby the same advantages as the above can be obtained.

### [6] Sixth Embodiment

### (1) Input of Subscriber Data

In sixth embodiment, the user specifies an item [timer reservation] executed at a step SP81 of FIG. 7 and an item [management data reservation] executed in a subroutine RT3 of FIG. 8. There is developed a waiting status for an input of the subscriber data D_{PRG}. The CPU 8 causes the keyboard 12 or the remote controller 6 to Input a subscriber name D_{NAME,} e.g., [CHICHI].

Letters of the subscriber name D_{NAME} may be sequentially inputted one by one; or alternatively the subscriber name may be Inputted by selecting it from a subscriber list previously registered by the user.

The CPU 8, after finishing the Input of the subscriber name D_{NAME}, writes the subscriber name D_{NAME} as subscriber data D_{PRG} in the item B13 of program information D_{PRX} stored in a management data memory of a register 44 via a bus 9.

Concurrently, the CPU 8 works so that the items [registration], [modification] and [reference] are displayed on the display screens 4A and 6A. Waiting till the user clicks the respective items at steps SP51 - SP53 or SP82 - SP84, the programs are reserved by making use of the displayed items [calendar reserving table], [one-week reserving table] and [one-day reserving table] at subsequent steps SP54 - SP56 or SP85 - SP87.

The processes of the timer reservation processing loop are then finished. After terminating the input of a start time and/or end time of the reserved program, as illustrated in FIG. 24, the CPU 8 causes the display screens 4A and 6A to display a reserving display DISP1 indicating a time zone of the reserved program which has already been registered.

In this embodiment, the reserving representation DISP1 is composed of items such as a reserved date, record start time, a record end time and a subscriber name of a reserved program PRG registered. For instance, in the case of a reserved program PRG1, [5.28 (Monday) 21:00 - 22:00 CHICHI] is displayed in the first line. This indicates that CHICHI (father) has a reserved program in a time zone from 9:00 AM to 10:00 PM, Monday, May 28. The second line of a reserved program PRG2 indicates that HAHA (mother) has a reserved program in a time zone from 8:00 PM to 10:00 PM, Tuesday, May 29. The contents are thus recognized at a glance.

Subsequently, the user instructs the keyboard 12 or the remote controller 6 to display a reservation list LIST of, e.g., [CHICHI] as a reservation list per subscriber. At this time, the CPU 8 retrieves the data inputted as [CHICHI] to the subscriber data D_{PRG} of the item B13 among the registered reserved program PRG stored as program information D_{RPX} in the register 44. Displayed on the display screens 4A and 6A, as shown in FIG. 25, are father's reserved programs PRG11, PRG12, PRG13... as a reservation display DISP2.

In this embodiment, the reservation display DISP2 is arranged such that [reservation list of CHICHI] is displayed as a reservation list of the subscriber name D_{NAME} specified at the uppermost stage. Displayed in line sideways from the left end at the second stage are items such as a reservation date, a record start time and record end time of the program which is registered by reservation at present. It is possible to grasp and recognize a registration status of the reserved programs PRG11, PRG12, PRG13... which are registered by [CHICHI] at a glance.

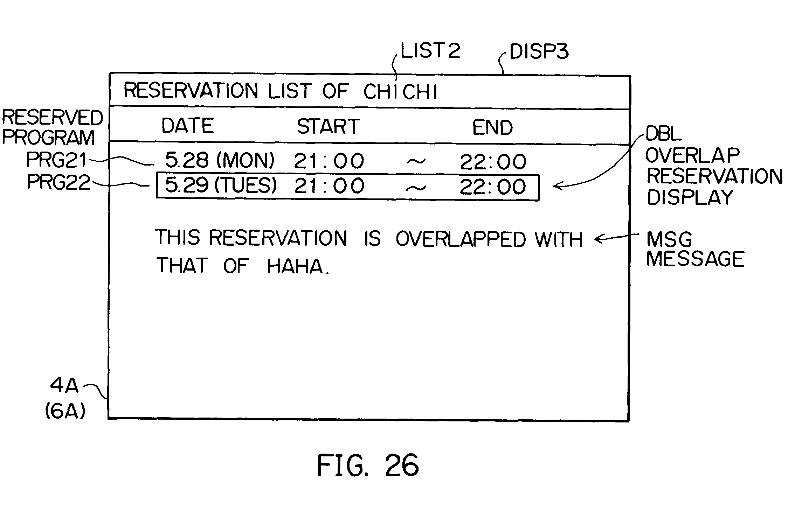

At this time CPU 8, when the user specifies the display of overlap reservations, retrieves a program having a time zone overlapped with those of reserved programs registered by other subscribers among the time zones of the reserved programs PRG11, PRG12, PRG13... shown in the reservation display DISP2. When retrieving the program having the overlapped time zone, an overlap reservation display DISP3 shown in FIG. 26 is displayed on the display screens 4A of the monitor 4 and on the display screen 6A of the remote controller 6.

In accordance with this embodiment, the overlap reservation display DISP3 is arranged as follows. A reserved program PRG22 (9:00 PM - 10:00 AM, Tuesday, May 29) having the overlapped time zone is displayed in the form of an overlap display DBL. Displayed at a lower stage on the display screens 4A and 6A is a message MSG indicating [this reservation is overlapped with that of HAHA]. This implies that the time zone has already been reserved by mother.

When the user will register a new program, a time zone of this program is overlapped with that of the registered program. In this case, it is feasible to discern the opponent user of this overlap. The reservation can be effected to avoid the overlap by consulting with the opponent user.

As a result, the programs having higher significance can surely safely be registered by reservation.

Based on the configuration discussed above, when reserve-registering the new registration programs in the video tape recorder employed in common by the plurality of users, the subscribers are registered beforehand. It is possible to confirm who reserved the programs. Only the reserved data of the individual users can be retrieved and displayed as well. Every user is able to easily surely grasp the reserving status per user.

If a time zone of the newly reserved program is overlapped with that of the registered reserved program, it is possible to confirm who registered the reserved program. After taking a confirmation from the user concerned, the modification or cancellation of the reserved data can be executed. It is therefore feasible to effectively steer clear of such a situation that the programs highly important to the users can not be recorded, or only partial recording is allowed to be effected.

### (2) Other Embodiments of Sixth Embodiment

(2-1) The embodiment discussed above has dealt with the case of inputting the subscriber name D_{NAME} before recording the program by reservation. The present invention is not, however, limited to this method. The subscriber name D_{NAME} may be inputted after inputting the reserving information.
(2-2) The embodiment discussed above has dealt with a case where the subscriber name D_{NAME} added to the program data is used for displaying the registered program list, the registered contents according to the subscriber names and the overlap reservations. The present invention is not, however, limited to this representation. The subscriber name D_{NAME} may be displayed in a variety of processing modes associated with the reserving information.
(2-3) In the embodiment discussed above, as illustrated in FIGS. 24 through 26, the reserving information is displayed in the form of characters, numerals and the like on the display screens 4A and 6A. The present invention is not, however, limited to this method. The information may be displayed by using graphic images.
(2-4) The embodiment discussed above has dealt with a case where the subscriber data D_{PRG} consisting of the subscriber name D_{NAME} is added to the program information D_{PRX} of the program registered by reservation. The present invention is not, however, limited to this method. The subscriber data D_{PRG} is added also to the registered program and then stored. With this arrangement, the past recorded data per user is displayed for selecting which recorded program to be reproduced.
(2-5) In the embodiment discussed above, this invention is applied to a video tape recorder. The present invention is not, however, limited to the VTR but widely applicable to electronic devices for consumer use such as a radio cassette.

### [7] Seventh Embodiment

### (1) Input Guide Display by Characters

In seventh embodiment, the CPU 8 executes input information processing procedures shown in FIGS. 7 through 9. In this case, it is in fact required at a multiplicity of processing steps that the user be prompted to effect the input operation and be informed of, if occurred, an operational mistake as well as of, if occurred in the electronic device, an abnormality.

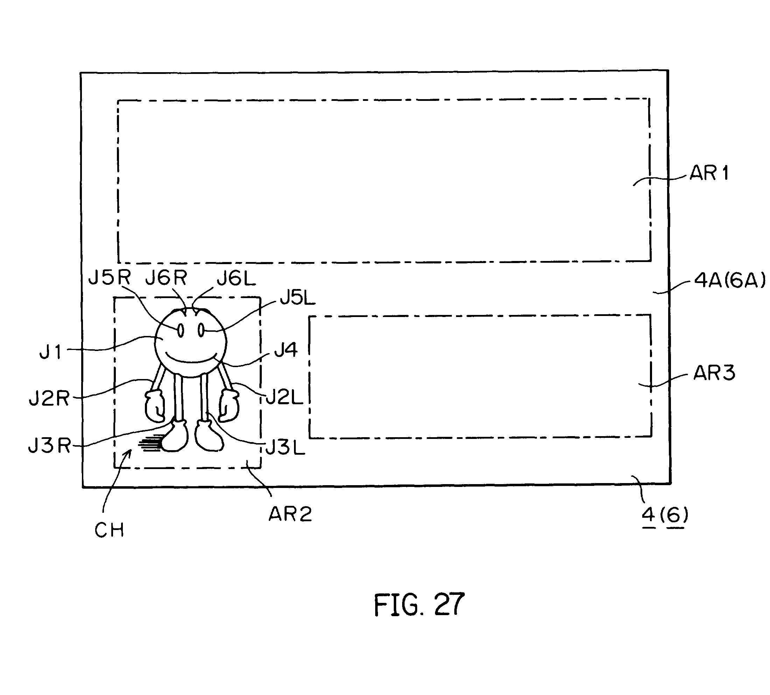

In such a case, the CPU 8 causes the display screen 4A or 6A to display a guide character CH shown in FIG. 27 as one of functions of a message system shown in a block BK5F of FIG. 2.

In this embodiment, a graphic display region AR1 is provided in an upper half position of the display screen 4A of 6A. Displayed in this graphic display region AR1 is a list containing pictorial elements, numeric elements and letter elements which indicate specified items specified by the user. A character display region AR2 for displaying the guide character CH is provided downwardly of the graphic display region AR1. A message display region AR3 for displaying messages is similarly provided.

The guide character CH is composed of personified pictorial elements. As shown in FIG. 11, a face element J1, left/right hand elements J2L, J2R and left/right leg elements J3L, J3R are depicted on the display screens 4A and 6A. In this manner, a plurality of actions of the guide character CH are expressible as an animated picture.

Added to the face element J1 are illustrations of a mouth element J4, left/right eye elements J5L, J5R and left/right eyebrows J6L, J6R. Owing to this representation, a plurality of expressions of the guide character CH can be provided as an animated picture.

### (2) Basic Image of Character and its Action

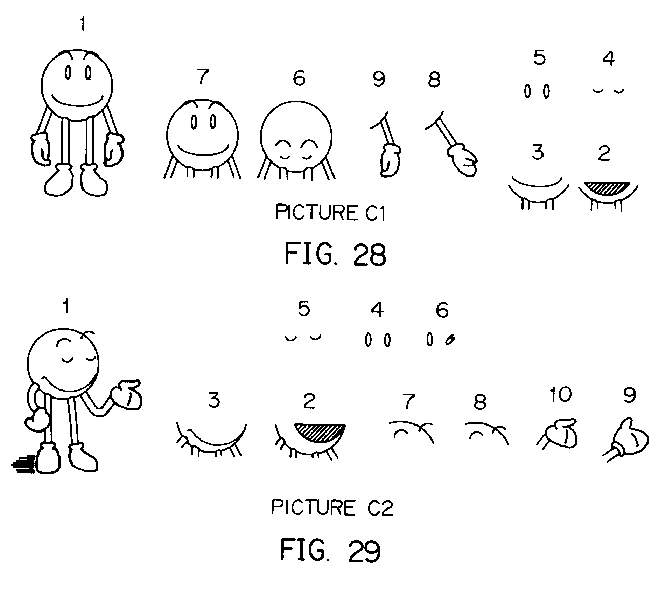

The guide character CH, as depicted in FIGS. 28 through 44, assumes a basic pictures having a characteristic of its own and pictures combined with motion pictures for providing the basic picture with motions.

A picture C1, as illustrated in FIG. 28, consists of a basic picture 1 with the guide character CH standing, a motion picture 2 with the mouth element J4 opened, a motion picture 3 with the mouth element J4 closed, a motion picture 4 with the eye elements J5L and J5R closed, a motion picture 5 with the eye elements J5L and J5R opened, a motion picture 6 with the face element J1 inclined down forwards, a motion picture 7 with the face element J1 rising front, a motion picture 8 with the left hand element J2L projecting slightly sideways and a motion picture 9 with the left hand element J2L lowered down.

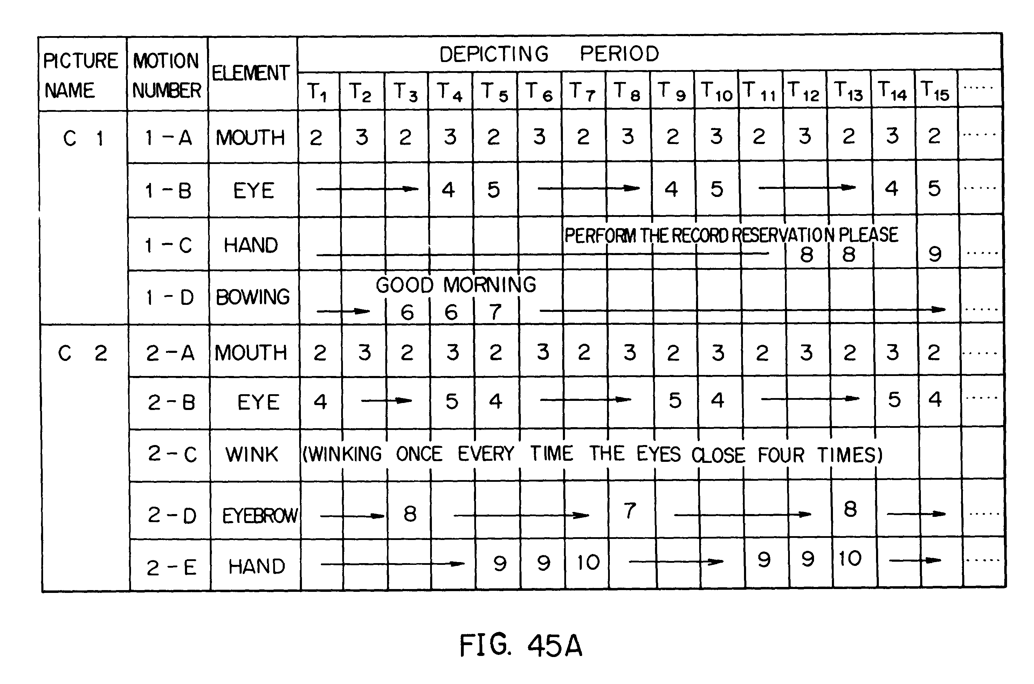

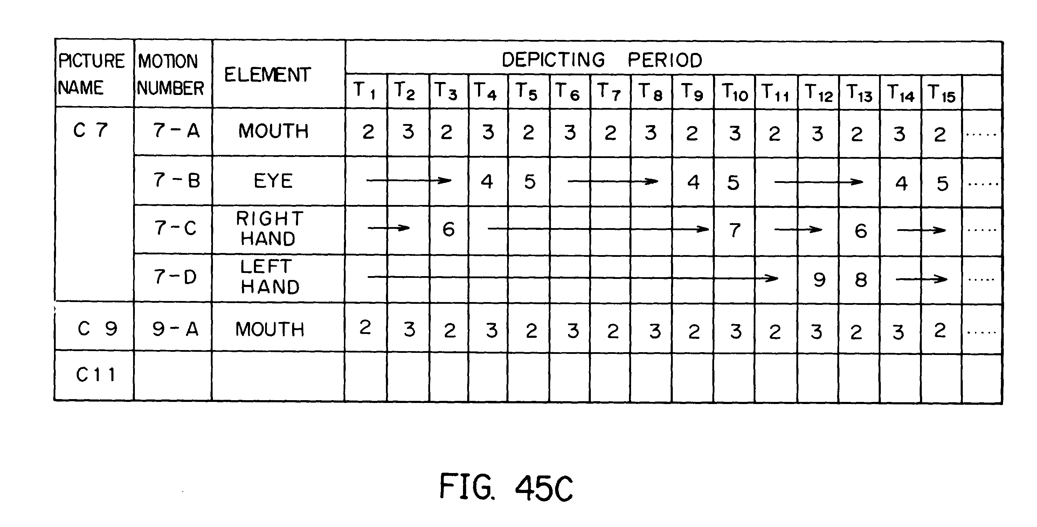

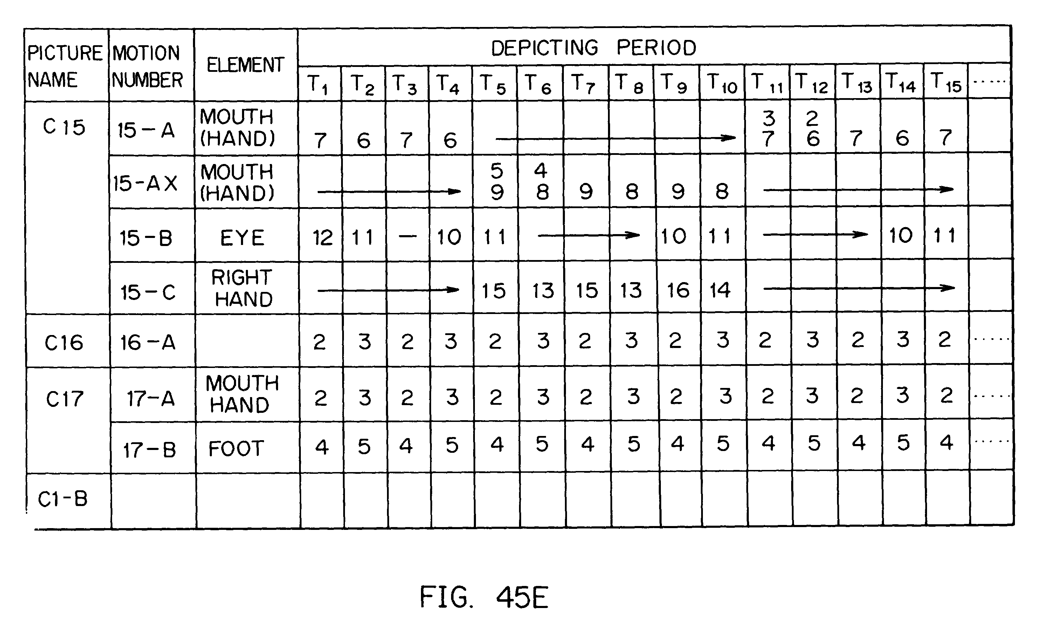

The mouth element J4 makes a motion as if the guide character CH speaks words when, as shown in a motion number 1-A column of a picture name C1 of FIG. 45A, the motion picture 2 and 3 are alternately depicted with passage of depiction periods T₁, T₂, T₃.... The left/right eye elements J5L and J5R make a motion as if the guide character CH blinks occasionally when, as shown in a motion number 1-B column, the motion picture 4 is intermittently depicted at timings of depiction periods T₄, T₉, T₁₄... mainly during display of the motion picture 5 with passage of the depiction periods T₁, T₂, T₃.... The left hand element J2L makes a motion as if the guide character CH moves the left hand slightly sideways while turning over the left palm when, as shown in a motion number 1-C column, the motion picture 8 is depicted only for the depiction periods T₁₂, T₁₃ and T₁₄ mainly during the display of the motion picture 9 with passage of the depiction periods T₁, T₂, T₃.... The face element J1 makes a motion as if the guide character bows when, as shown in a motion number 1-D column, the motion picture 6 is depicted only for the depiction periods T₃ and T₄ during the display of the motion picture 7 with passage of the depiction periods T₁, T₂, T₃....

When specifying the picture C1, the guide character CH occasionally blinks with passage of the depiction periods T₁, T₂, T₃.... In the meantime, the guide character CH speaks words, for example, [Good morning. Perform the record reservation please]. Simultaneously, the guide character CH bows by lowering the head at a timing when speaking [... morning]. Immediately, the character CH makes a motion to prompt the user to effect an input operation with the left hand at a timing when speaking [Please].

Thus, the picture C1 expresses such an action that the guide character CH urges the input after appearing on the display screen 4A and 6A and making a bow.

Similarly, a picture C2 includes the basic picture 1 which, as illustrated in FIG. 29, takes a pose to urge a confirmation by bending the left hand while standing obliquely leftwards. As shown in a motion number 2-A column of a picture name C2 of FIG. 45A, the mouth element J4 speaks words. The left/right eye elements J5L and J5R occasionally blink as shown in a motion number 2-B. As shown in a motion number 2-C, the left eye element J5L winks only once every time the eyes are closed four times. The left/right eyebrow elements J6L and J6R act as shown in a motion number 2-D. Occasionally, the left eyebrow element J6L is a little bit turned up. The left hand element J2L, as shown in a motion number 2-E, acts in such a way that the palm is expanded and occasionally slightly inclined upwards.

In this manner, the picture C2 expresses an action to seek a confirmation of the contents of the display regions AR1 and AR3 on the display screens 4A and 6A.

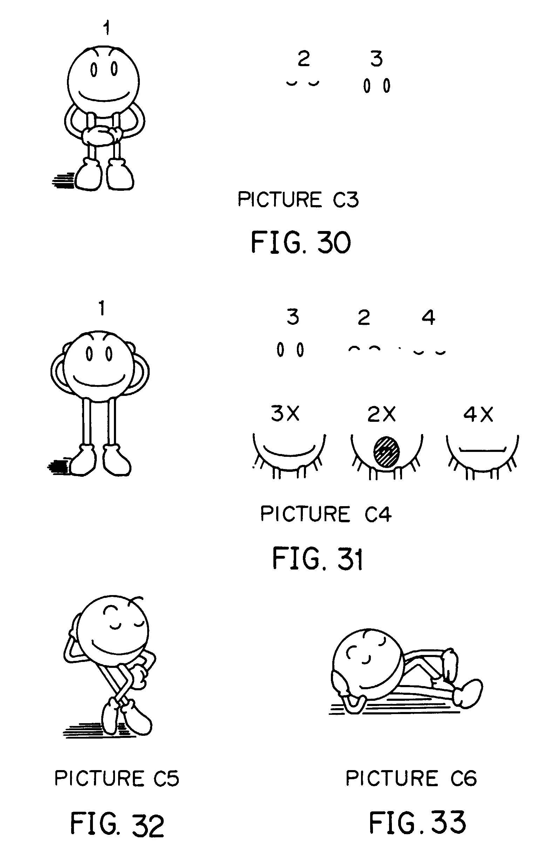

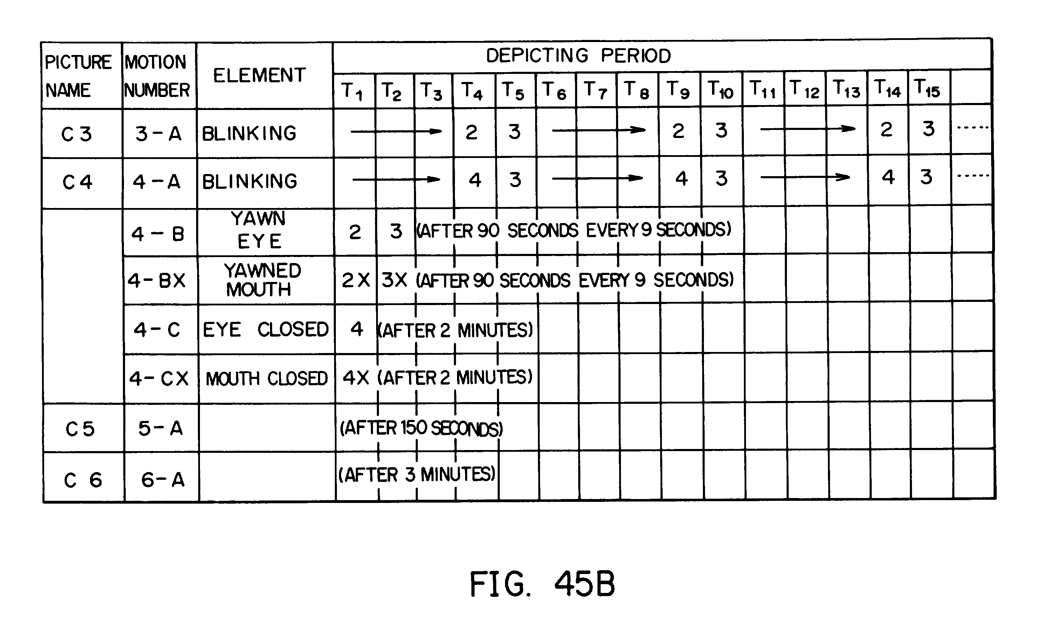

Pictures C3 through C6 are intended to change the behavior of the guide character CH during a period for which the user awaits the input operation waiting status. The picture C3 acts as follows. As illustrated in FIG. 30, the basic picture 1 stands taking a pose to expect the input operation. Based on this pose, the motion picture C2 has the left/right eye elements J5L and J5R closed. Whereas in the motion picture C3, the eye elements are opened. The eyes thus blink as shown in a motion number 3-A column of the picture name C3 of FIG. 45B.

The picture C4 acts in the following manner. As depicted in FIG. 31, the basic picture 1 takes a such a pose that the left/right hand elements J2L and J2R join together behind the head. Based on this pose, as shown in a motion number 4-A of the picture name C4 of FIG. 45B, the eyes blink when with the left/right eye elements J5L and J5R of the pictures 3 and 4 are opened and closed. Subsequently, after a waiting time, e.g., 90 seconds has elapsed, as shown in motion numbers 4-B and 4-BX, the character CH yawns by every, e.g., 9 seconds with actions of the motion pictures 2 and 3 having the eye elements J5L and J5R and of motion pictures 2X and 3X each having the mouth element J4.

After an input waiting time of 2 minutes has passed from this state, as shown in motion numbers 4-C and 4-CX of FIG. 45B, the guide character CH sleeps standing with the mouth closed in combination with the actions of the motion picture 4 having the eye elements J5L and J5R and of a motion picture 4X having the mouth element J4.

The input waiting time further extends to 150 seconds. Thereafter, as shown in a motion number 5-A of the picture name C5 of FIG. 45B and FIG. 32 as well, the guide character CH sleeps leaning backwards.

The input waiting time further extends to 3 minutes. Thereafter, as shown in a motion number 6-A of the picture name C6 of FIG. 45B and FIG. 33, the guide character CH sleeps lying.

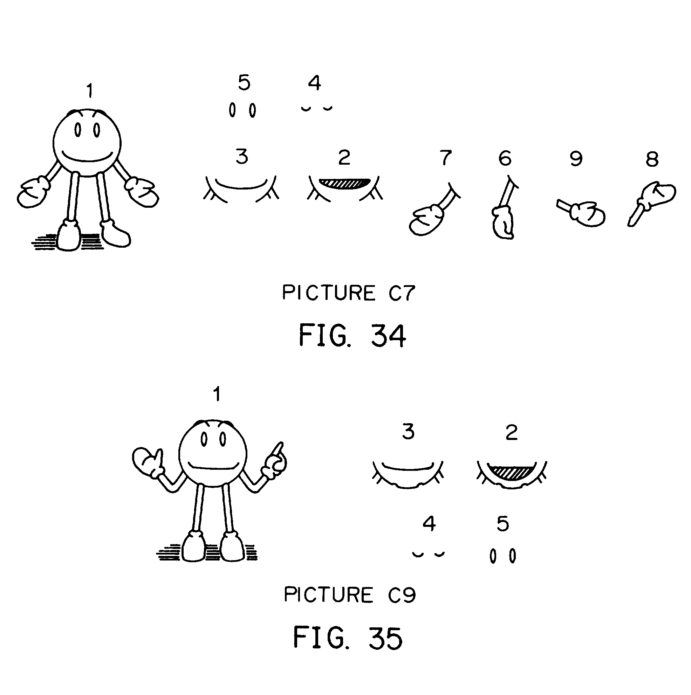

As depicted in FIG. 34, a picture C7 acts based on the basic picture 1 with the both hands expanded. As shown in motion numbers 7-A, 7-B, 7-C and 7-D of a picture name C7 of FIG. 45B, the character CH speaks with actions of the mouth element J4 of the picture 2 and 3. The character CH blinks with actions of the left/right eye elements J5L and J5R of the pictures 4 and 5. The right hand element J2R is occasionally lowered as in the way with the motion pictures 6 and 7. the left hand element J2L raises the palm as in the way with the motion pictures 9 and 8.

Thus, the picture C7 exhibits a motion to urge a re-operation when causing an error in the input operation.

A picture C9 acts based on the basic picture 1 in which, as depicted in FIG. 35, both palms are raised up to the shoulders. The character CH speaks with actions of the mouth element J4 as shown in a motion number 9-A of the picture name 9C of FIG. 45A.

Thus, the picture C9 expresses a motion to indicate an error in an input sentence.

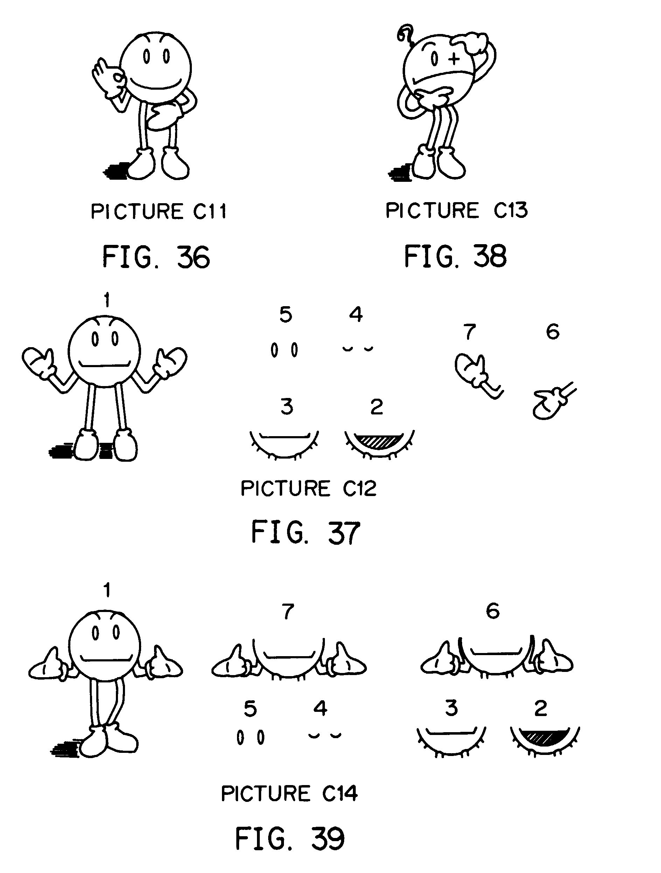

A picture C11 acts so that, as depicted in FIG. 36, the right hand element J2R gives an sign of OK. This action is continuously displayed as shown in a picture name C11 column of FIG. 45A. The user is thus informed that the system obtains a proper judging result (OK) after the confirmation.

A picture C12 acts as follows. The basic picture 1, as depicted in FIG. 37, assumes a pose in which the hands are raised with both palms opened. As shown in motion numbers 12-A, 12-B and 12-C of a picture name C12 of FIG. 45C, the character CH speaks with actions of the mouth element J4 of the motion pictures 2 and 3. The character CH blinks with actions of the left/right eye elements J5L and J5R of the motion pictures 4 and 5. The right hand element J2R reciprocates once between high and low positions as in the way with the motion pictures 6 and 7.

In this manner, the picture C12 of the guide character CH exhibits a motion to inform the user of an inferred condition of the system during, e.g., record waiting.

A picture C13, as illustrated in FIG. 38, expresses an embarrassment. The embarrassed picture is, as shown in a picture name C13 of FIG. 45C, continuously displayed. This gives a motion to inform the user of an error caused in the input operation.

A picture C14 acts as below. As depicted in FIG. 39, the basic picture 1 takes such a pose that the character CH shrugs with the left/right hand elements J2L and J2R expanded. Based on this pose, as shown in motion numbers 14-A, 14-B and 14-C of a picture name C14 of FIG. 45C, the character CH speaks with actions of the mouth element J4 of the motion pictures 2 and 3. The character CH blinks with actions of the left/right eye elements J5L and J5R of the motion pictures 4 and 5. The positions in which the left/right hand elements J2L and J2R are raised change as in the way with the motion pictures 6 and 7.

Thus, the picture C14 of the guide character CH expresses a motion to give an indication of an error in the input.

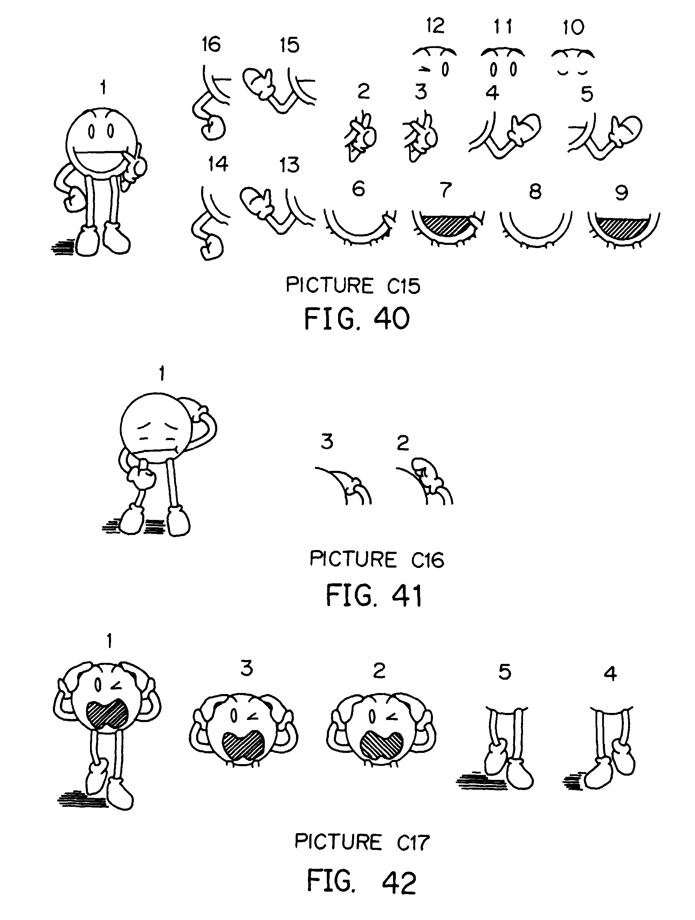

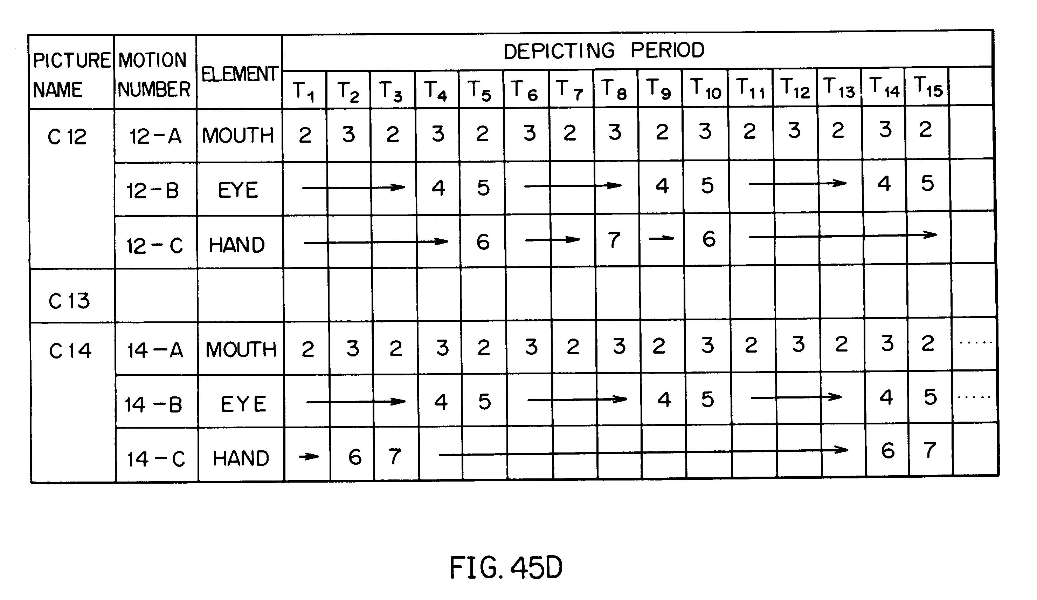

A picture C15 acts based on the basic picture 1 exhibiting, as depicted in FIG. 40, a V-sign with the left hand element J2L disposed in front of the face. As shown in motion numbers 15-A and 15-AX of a picture name C15 of FIG. 45D, the character makes a motion to speak with actions of the mouth element J4 and the left hand element J5L of the motion pictures 6 and 7. Thereafter, the motion pictures 5 and 9 or 4 and 8 are combined to move the left hand aside the face while speaking. Subsequently, speaking continues with actions of the motion pictures 8 and 9. Then, the pictures 3 and 7 or 2 and 6 are combined to move back the left hand to the position in front of the face while speaking. Speaking further continues with subsequent actions of the pictures 7 and 6.

Concurrently with this action, as shown in motion numbers 15-B and 15-C columns, the right eye winks with actions of the motion picture 12 in combination with the left/right elements J5L and J5R. Thereafter, the eyes blink with actions of the motion pictures 11 and 12. At the same moment, the right hand element is raised up to the position of the face while being expanded with actions of the motion pictures 13 and 15. Subsequently, the right hand element returns to its original position with actions of the motion pictures 14 and 16.

Thus, the picture C15 of the guide character CH expresses a motion to indicate an error in the input sentence.

A picture C16 acts based on the basic picture 1 which, as illustrated in FIG. 41, looks sad with the head somewhat dropping. In this pose, as shown in a motion number 16-A column of a picture name C16 of FIG 45D, the character CH scratches the head by the left hand with actions of the motion pictures 2 and 3.

Thus, the picture C16 of the guide character CH exhibits a motion to inform the user of an operational mistake in the system.

A picture C17 arts based on the basic picture 1 shouting loudly with both hands holding the head as depicted in FIG. 42. In this pose, as shown in motion numbers 17-A and 17-B columns of a picture name C17 of FIG. 45D, the character CH speaks with actions of the motion pictures 2 and 3. The character CH stamps with actions of the motion pictures 4 and 5 while speaking.

Thus, the picture C17 of the guide character CH exhibits a motion to inform the user of an abnormality caused in the system.

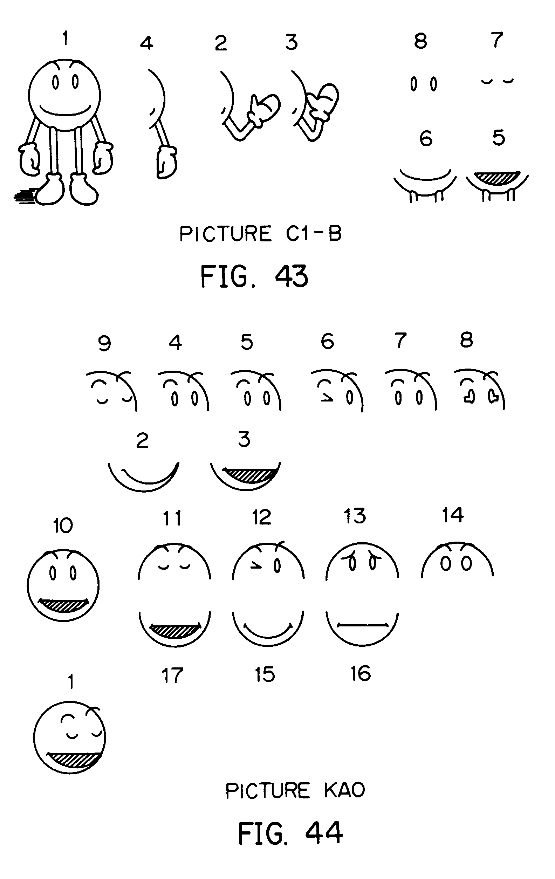

A picture C1-B acts based on the basic picture 1 standing erect as shown in FIG. 43. As shown in a picture name C1-B of FIG. 45D, the character CH speaks with actions of the motion pictures 5 and 6 and blinks with actions of the motion pictures 7 and 8. The left hand waves with actions of the motion pictures 2 and 3 and thereafter moves back to the original position with an action of the motion picture 4.

Thus, the picture C1-B of the guide character CH expresses a greeting before disappearing from the screen.

A picture KA0 acts based on the basic picture 1 smiling with the face directed obliquely forwards as illustrated in FIG. 44. In this pose, as shown in a picture name KA0 column of FIG. 50, the character CH assumes a variety of expressions.

An expression of [message 1] in FIG. 50 is shown as follows. As shown in a motion number A column, the character CH speaks with actions of the motion pictures 2 and 3. Simultaneously the eyes blink with actions of the motion pictures 5 and 9. Thereafter, the eyes open with an action of the motion picture 4 while turning up the left eyebrow. This expression continues.

An expression of [message 2] is shown as follows. As shown in a motion number B column, the character CH speaks with actions of the motion pictures 2 and 3. The eyes gradually open with actions of the motion pictures 5,9 and 4 in sequence while speaking. From this state, the eyes close after temporarily turning up the left eyebrow and then open. Subsequently, the right eye winks with an action of the motion picture 6. Then, the eyes blink with actions of the motion pictures 5, 9 and 4.

An expressions of [message 3] is shown as follows. As shown in a motion number C column, the character CH speaks with actions of the motion pictures 2 and 3. The eyes blink with actions of the motion pictures 4 and 9 while speaking. Thereafter, the eye position moves sideways with an action of the motion picture 7 and then returns.

An expression of [waiting 1] is shown as follows. As shown in a motion number D column, the mouth closes with an action of the motion picture 3. In this state, the eye blink with actions of the motion pictures 5 and 9 and thereafter move sideways with an action of the motion picture 7. After this movement, the eye position returns. Such motions are repeated.

An expression of [message 4] is shown as follows. As shown in a motion number E column, the character CH speaks with actions of the motion pictures 15 and 17. In this state, the eyes blink by alternately repeating actions of the motion pictures 11 and 14.

An expression of [message 5] is shown as follows. As shown in a motion number F column, the character CH speaks with actions of the motion pictures 15 and 17. The eyes blink once with actions of the motion pictures 11 and 14 while speaking. Thereafter, the right eye winks with actions of the motion pictures 12 and 14. Then blinking resumes with actions of the motion pictures 11 and 14.

An expression of [waiting 2] is shown as follows. As shown in a motion number G column, the character CH looks confused with the eye's corners turned down in combination with the motion picture 13. Simultaneously, the mouth closes straight and opens with actions of the motion pictures 16 and 17.

### (3) Animated Action

### (3-1) Timer Reservation and Management Data Reservation

When executing the management data reservation at a subroutine RT3 (FIG. 8) and the timer reservation at a step SP81 (FIG. 7), the control management data processing CPU 8 causes the display screens 4A and 6A to display the guide character CH. The user is in turn able to read a request as to whether or not the input operation is needed corresponding to variations in scene from motions or expressions of the guide character CH.

### [Scene 1]

To start with, the user manipulates a menu display mode specifying key 6E (FIG. 10) of the remote controller 6. At this time, the CPU 8 correspondingly works to specify the motion numbers 1-A, 1-B and 1-D of the picture name C1 (FIG. 45A). As depicted in FIG. 28, the basic picture 1 of the guide character CH is made to appear on the display screen and then speaks. Besides, the eyes blink, and the character CH bows. Displayed thereon is a motion of making a greeting.

### [Scene 2]

Subsequently, the CPU 8 specifies the motion numbers 1-A, 1-B and 1-C of the picture name C1 (FIG. 45A). The CPU 8 causes the guide character CH to speak based on the basic picture 1 of the picture C1 (FIG. 28). The character CH acts in such a way that the palm of the left hand is turned over laterally with the eyes blinking, thus prompting the user to input.

### [Scene 3]

Next, the CPU 8 specifies the basic picture 1 of the picture name C1. The guide character CH stands with the face awaiting something. This expresses a state where the system waits for the input of the user.

### [Scene 4]

If this waiting status continues for 10 seconds, the CPU 8 specifies the motion number 3-A of the picture name C3 (FIG. 45B). Based on the basic picture 1 of the picture C3 (FIG. 30), the eyes blink. This informs the operator of a desire for effecting the input operation quickly, because the waiting time increases.

### [Scene 5]

If no inputting process is thereafter performed by the user, and when the waiting time exceeds 30 seconds, the CPU 8 specifies the motion number 4-A of the picture name C4 (FIG. 45B). In the basic picture 1 of the picture C4 (FIG. 31), the guide character CH with the eyes blinking is displayed, thus informing the user of a get-tired look due to a long wait.

### [Scene 6]

If the input waiting status further continues, and after only 90 seconds have passed, the CPU 8 specifies the motion numbers 4-B and 4-BX of the picture C4 (FIG. 45B). Yawn eyes are given by actions of the motion pictures 2 and 3 of the picture C4 (FIG. 31). A yawned mouth is given by actions of the pictures 2X and 3X. The yawn eyes and the yawned mouth are displayed at intervals of 9 seconds. The guide character CH intermittently yawns as well as blinking the eyes. The user is thus informed that the wait for the input is long enough to cause a satiation.

### [Scene 7]

If the input waiting status further continues, and after 2 minutes have elapsed, the CPU 8 specifies the motion numbers 4-A and 4-CX of the picture name C4 (FIG. 45B). The motion pictures 4 and 4X of the picture C4 (FIG. 31) are displayed as if the guide character CH dozes with the eyes closed. The user is thus informed that the input waiting status continues enough to cause dozing.

### [Scene 8]

If the input waiting status further continues, and after 150 seconds have passed, the CPU 8 works to display the picture C5 (FIG. 32). The guide character expresses sleepy looking enough to lean backwards. The user is thus informed that the input waiting status continues to such an extent.

### [Scene 9]

If the input waiting status further continues, and after 3 minutes have elapsed, the CPU 8 works to display the picture C6 (FIG. 33). By virtue of the guide character CH, the user is informed that the input waiting status continues enough to cause a lying sleep.

### [Scene 10]

The operator is aware of a pose of the guide character CH and performs inputting during any one of the waiting statuses of [Scene 3] through [Scene 9]. In this case, the CPU 8 judges whether the input sentence is deficient or not at a timing when finishing the input operation. If deficient, the picture C15 (FIG. 40) is specified. The inputted item is pointed out by the left hand of the basic picture 1 thereof. From this state, the right eye winks slightly. Thereafter, both hands are expanded away from the face. This motion implies that the user is prompted to further effect inputting.

### [Scene 11]

If there exists, it is judged, a mistake in the input sentence when the user terminates inputting, the CPU 8 causes the guide character to make a motion showing an incomprehensibility by displaying the picture C13 (FIG. 38) only for approximately 1.5 seconds. After this step, the picture C9 (FIG. 35) is displayed, whereby the guide character CH is forced to make such a motion as to speak of an error. Subsequently, the picture C15 (FIG. 40) is displayed, whereby the guide character CH is caused to make a motion of desiring that the input operation be corrected. The user is thus informed of this matter.

### [Scene 12]

There exists an error when finishing the input operation. In this case, the CPU 8 causes the guide character CH to shrug with both palms moving up and down by displaying the picture C14 (FIG. 39). Thereafter, the picture C7 (FIG. 34) is displayed, whereby the character CH takes a pose to slightly raise the left open palm. This informs the user of a desire to perform inputting once more.

### [Scene 13]

It is desired that the input result be confirmed at a timing when the user finishes the input operation. In this case, the CPU 8 causes the guide character CH to take the following pose by displaying the picture C2 (FIG. 29). The character CH takes a slightly oblique posture with the left palm slightly moved while the left eye winks. This motion expresses a desire for a slight confirmation. The operator is thus prompted to make a confirmation.

### [Scene 14]

If the system is in a record standby status when the operator performs recording, the CPU 8 infers the present status. After this inference, the picture C12 (FIG. 37) is displayed. Thus, the guide character CH moves the right hand up and down with the explanatory face. This expresses an action of explaining with all endeavors. The user is thus informed that the system remains in the record standby status.

### [Scene 15]

In this manner, the user completes all the timer reservations and clicks an item [end]. At this time, the CPU 8, when displaying the picture C1-B (FIG. 43), causes the guide character CH to give a good-by sign with the left hand waving slightly. There user is notified of an end of the management data reservation mode or the timer reservation mode.

### (3-2) Record Standby

When the video tape recorder unit 3 is brought into the record standby status, the CPU 8 makes the display screen indicate a cause thereof as a message. The guide character CH serves to inform the user of the content thereof.

### [Scene 21]

When the record standby status is developed, the CPU 8 at first functions to display the picture C1 (FIG. 28). Then, the guide character CH appears to greet. After this step, the character CH takes a pose to urge inputting. This notifies the user that the record standby status is developed.

Subsequently, the CPU 8 works to display the picture C2, thereby making a slight assurance to see a message on the display screen.

Thereafter, in a state where the input operation is required subsequently, the user is informed of the desire to re-effect the input operation by going back to the picture C1 (FIG. 28).

Whereas if unnecessary for inputting, the picture C1-B (FIG. 43) is displayed. The guide character CH exits while giving a good-by sign.

### [Scene 22]

The record standby status is derived from the error in the input operation. In this case, the CPU 8 functions to display the picture C1 (FIG. 28), whereby the guide character CH appears to make a greeting. After this action, the character CH takes a pose to urge inputting. Thereafter, the picture C7 (FIG. 34)is displayed. Displayed on the display screen is a message indicating the error in the input operation. The guide character CH is formed to take an explanatory pose for this. The picture C1 (FIG. 28) or the picture C1-B (FIG. 43) is then displayed, and the guide character CH exits.

### [Scene 23]

The CPU 8 infers the cause for the record standby status and informs the user of this cause. In this case, the CPU 8 makes the guide character CH appear by using the picture C1 (FIG. 28). After this action, the picture C12 (FIG. 37) is displayed on the display screen to take a pose of explaining a preset situation. The picture C1 (FIG. 28) or the picture C1-B (FIG. 43) is temporarily displayed. The guide character CH then exits.

### [Scene 24]

If the record standby status is derived from the error in the input sentence, the CPU 8 works to display the picture C1 (FIG. 28). The guide character CH then appears to explain the error in the input sentence by using the picture C15 (FIG. 40). After this explanation, the picture C1 (FIG. 28) or the picture C1-B (FIG. 43) is displayed, with the result that the guide character CH exits.

### (3-3) Standby Waiting Status

The user manipulates a menu display specifying key 6E of the remote controller 6 in the input information processing procedures of FIG. 7. As a result, there is developed an initial waiting status of awaiting till the user specifies the items [management data], [system setting], [preference setting] and [timer reservation]. At this time, the CPU 8 makes the guide character appear by displaying the picture C1 (FIG. 28). After this step, the CPU 8 causes the guide character CH to take a pose of urging the input operation.

### (3-4) Guide by Face Expression

The CPU 8 in fact sends messages in the man-machine interactive mode at the respective steps and awaits responses from the user. These operations are repeated. When displaying the messages or awaiting the responses, the motion numbers A, B, C, E and F, or D and G of the picture KA0 (FIG. 50) are specified. A variety of expressions are indicated to the user each time according to the necessity. The CPU 8 thus informs the user of the requests.

### (3-5) Power Turn-ON Status

The CPU 8, when the user turns ON the power supply at the step SP1 of FIG. 7, specifies the picture C1 (FIG. 28). The guide character CH then appears to make a greeting. Thereafter the character CH takes a pose of urging the input operation.

### (4) Other Embodiments of Seventh Embodiment

(4-1) The embodiment discussed above has dealt with a case the present invention is applied to the video tape recorder. The present invention is not, however, limited to the VTR but may be widely applied to cases where the instructive information is inputted to electronic devices for consumer us such as, a so-called radio cassette.
(4-2) The embodiment discussed above has dealt with a case where the guide character exhibits poses or expressions to indicate contents of the messages in combination with the display thereof. Instead of the message display, or in combination with the message display, the user may be guided by the pictorial display and the list display. In short, the user is informed of the operating statuses of the electronic devices by displaying the interactive display elements on the display screen. The guide character exhibiting the poses and expression to attract the attention may be displayed.

While there has been described in connection with the preferred embodiments of the invention, it will be obvious to those skilled in the art that various changes and modifications may be made therein without departing from the invention, and it Is aimed, therefore, to cover in the appended claims all such changes and modifications as fall within the true scope of the invention.

## Claims

1. A system for controlling a recording and reproducing apparatus (1) comprising :
a recording medium (36);
a recording track, formed in said recording medium (36) and including a management database recording region (F_{AVV}, F_{AVA}) and a program recording region (F_{VD}) in which programs are recorded; and
management data (D_{AV}) recorded in said management database recording region and being in a form which is reproducible by said program reproducing apparatus (1) for controlling the management by said program reproducing apparatus of the programs recorded on said recording mediums
characterised by :
said management data including for each of said programs, reproduction data (B3) representing information indicating whether or not the respective program has been reproduced previously from said recording medium (36); and
the system further comprising means (6A) for displaying to a user the information represented by said reproduction data (B3).

2. A system according to claim 1, wherein the management data (D_{AV}) includes data (B3, A9) representing erase permission information or erase inhibition information and the apparatus is provided with means operative whereby said program on said recording medium is permitted to be erased or inhibited from being erased based on said erase permission information or said erase inhibiting information.

3. A system according to claim 2, wherein the management data (D_{AV}) further includes program information (D_{PRX}) corresponding to each of said programs recorded in said recording track of said recording medium.

4. A system according to claim 1, wherein said management data (D_{AV}) includes external unit control data (D_{CTL}) for controlling a plurality of external units (61,62,63,64) and the apparatus is provided with means for controlling said external units (61,62,63,64) in accordance with said external unit control data (D_{CTL}).

5. A system according to claim 1, wherein said management data (D_{AV}) includes data representing program reservation information prior to recording of said one or more programs for preventing the recording of said one or more programs by said recording apparatus during a predetermined time period, and a recorded program flag which is to be changed to a recorded program state by the reproducing apparatus upon recording of one or more programmes to redesignate said program reservation information as recorded program information.

6. A system according to claim 1, wherein the management data includes subscriber data (D_{PRG},B13), and
the apparatus is provided with means for using said management data to display a registration status of the program on a display screen, the means comprising :
means for allocating subscriber data of a program to said management data corresponding to the program,
and means for displaying said registration status of the program based on the subscriber data.

7. A system according to claim 1, wherein the apparatus includes means for prompting a responsive operation of the user by displaying interactive display elements representing operating conditions of an electronic device body on a display screen comprising :
a character display means for displaying a personified guide character exhibiting expressions and actions corresponding to display contents of said interactive display elements in positions corresponding to said interactive display elements on said display screen.

8. A system according to claim 7, wherein said personified guide character is composed of personified pictorial elements to be expressible as an animated picture.

## Patentansprüche

1. Steuersystem für ein Aufzeichnungs- und Wiedergabegerät (1) mit: einem Aufzeichnungsmedium (36),
einer Aufzeichnungsspur, die auf dem Aufzeichnungsmedium (36) ausgebildet ist, und einen Verwaltungsdatenbank-Aufzeichnungsbereich (F_{AVV}, F_{AVA}) und einen Programmaufzeichnungsbereich (F_{VD}) enthält, in dem Programme aufgezeichnet sind, und
Verwaltungsdaten (D_{AV}), die im Verwaltungsdatenbank-Aufzeichnungsbereich aufgezeichnet sind, und in einer Form vorliegen, die von dem Programm - Wiedergabegerät (1) wiedergebbar sind, um die Verwaltung der auf dem Aufzeichnungsmedium aufgezeichneten Programme durch das Programm-Wiedergabegerät zu steuern,
dadurch gekennzeichnet,
daß die Verwaltungsdaten für jedes der Programme Wiedergabedaten (B3) enthält, die Informationen vertreten, ob das jeweilige Programm zuvor von dem Aufzeichnungsmedium (36) wiedergegeben wurde oder nicht, und
daß das System weiterhin eine Einrichtung (6A) aufweist, um einem Benutzer die von den Wiedergabedaten (B3) vertretene Information anzuzeigen.

2. System nach Anspruch 1, bei dem die Verwaltungsdaten (D_{AV}) Daten (B3, A9) enthalten, die eine Lösch-Zulassungsinformation oder eine Lösch-Sperrinformation vertreten, und das Gerät mit einer Einrichtung versehen ist, durch deren Betrieb das Programm auf dem Aufzeichnungsmedium auf der Grundlage der Lösch-Zulassungsinformation oder der Lösch-Sperrinformation für ein Löschen zugelassen wird oder für ein Löschen gesperrt wird.

3. System nach Anspruch 2, bei dem die Verwaltungsdaten (D_{AV}) weiterhin eine Programminformation (D_{PRX}) enthalten, die jedem der auf der Aufzeichnungsspur des Aufzeichnungsmediums aufgezeichneten Programm entspricht.

4. System nach Anspruch 1, bei dem die Verwaltungsdaten (D_{AV}) Steuerdaten (DCTL) für externe Einheiten enthalten, um mehrere externe Einheiten (61, 62, 63, 64) zu steuern, und das Gerät mit Einrichtungen versehen ist, um die externen Einheiten (61, 62, 63, 64) gemäß den Steuerdaten (DCTL) für die externen Einheiten zu steuern.

5. System nach Anspruch 1, bei dem die Verwaltungsdaten (D_{AV}) Daten, die eine Programmfreihalteinformation vor dem Aufzeichnen des einen oder der mehreren Programme vertreten, um das Aufzeichnen des einen oder der mehreren Programme durch das Aufzeichnungsgerät während eines vorbestimmten Zeitbereichs zu verhindern, und einen aufgezeichneten Programmzeiger enthalten, der für einen aufgezeichneten Programmzustand durch das Wiedergabegerät auf das Aufzeichnen des einen oder der mehreren Programme hin zu ändern ist, um die Programmfreihalteinformation als aufgezeichnete Programminformation wiederzubestimmen.

6. System nach Anspruch 1, bei dem die Verwaltungsdaten Teilnehmerdaten (D_{PRG}, B13) enthält, und wobei
das Gerät eine Einrichtung aufweist, um die Verwaltungsdaten zum Anzeigen eines Speicherzustands des Programms auf einem Anzeigeschirm zu verwenden, wobei die Einrichtung aufweist:
eine Einrichtung zum Zuweisen von Teilnehmerdatendaten eines Programms zu den dem Programm entsprechenden Verwaltungsdaten, und
einer Einrichtung, um auf der Grundlage der Teilnehmerdaten den Speicherzustand des Programms anzuzeigen.

7. System nach Anspruch 1, bei dem das Gerät eine Einrichtung enthält, um auf einen Antwort-Betrieb des Benutzers hin durch das Anzeigen interaktiver Anzeigeelemente zu reagieren, die Betriebszustände eines elektronischen Gerätekörpers auf einem Anzeigeschirm vertreten, mit:
einer Zeichenanzeigeeinrichtung, um ein personifiziertes Führungszeichen, das Ausdrücke und Vorgänge darstellt, entsprechend dem Anzeigeinhalten der interaktiven Anzeigeelementen an einer Stelle, die den interaktiven Anzeigeelementen auf dem Anzeigeschirm entspricht, anzuzeigen.

8. System nach Anspruch 7, bei dem das personifizierte Führungszeichen aus personifizierten Bildelementen zusammengesetzt ist, um als ein angeregtes (animiertes) Bild ausdrückbar zu sein.

## Revendications

1. Un système pour commander un appareil d'enregistrement et de reproduction (1) comprenant :
un support d'enregistrement (36);
une piste d'enregistrement, formée sur le support d'enregistrement (36), et comprenant une région d'enregistrement de base de données de gestion (F_{AVV}, F_{AVA}) et une région d'enregistrement d'émissions (F_{VD}) dans laquelle des émissions sont enregistrées; et
des données de gestion (D_{AV}) enregistrées dans la région d'enregistrement de base de données de gestion, et étant d'une forme qui est reproductible par l'appareil d'enregistrement d'émissions (1), pour commander la gestion par l'appareil de reproduction d'émissions, des émissions qui sont enregistrées sur le support d'enregistrement
caractérisé en ce que
les données de gestion comprennent, pour chacune des émissions, des données de reproduction (B3) représentant une information qui indique si l'émission respective a été reproduite ou non précédemment à partir du support d'enregistrement (36); et
le système comprend en outre des moyens (6A) pour visualiser à l'intention d'un utilisateur l'information qui est représentée par les données de reproduction (B3).

2. Un système selon la revendication 1, dans lequel les données de gestion (D_{AV}) comprennent des données (B3, A9) représentant une information de permission d'effacement ou une information d'interdiction d'effacement, et l'appareil comporte des moyens par l'action desquels l'effacement de l'émission sur le support d'enregistrement est permis ou est interdit, sur la base de l'information de permission d'effacement ou de l'information d'interdiction d'effacement.

3. Un système selon la revendication 2, dans lequel les données de gestion (D_{AV}) comprennent en outre une information d'émission (D_{PRx}) correspondant à chacune des émissions enregistrées dans la piste d'enregistrement du support d'enregistrement.

4. Un système selon la revendication 1, dans lequel les données de gestion (D_{AV}) comprennent des données de commande d'unités externes (D_{CTL}) pour commander un ensemble d'unités externes (61, 62, 63, 64), et l'appareil comprend des moyens pour commander ces unités externes (61, 62, 63, 64) conformément aux données de commande d'unités externes (D_{CTL}).

5. Un système selon la revendication 1, dans lequel les données de gestion (D_{AV}) comprennent des données représentant une information de réservation d'émission, avant l'enregistrement de l'émission ou des émissions, dans le but d'empêcher l'enregistrement de cette émission ou de ces émissions par l'appareil d'enregistrement pendant un intervalle de temps prédéterminé, et un indicateur d'émission enregistrée qui doit être commuté par l'appareil de reproduction vers un état d'émission enregistrée, au moment de l'enregistrement d'une ou de plusieurs émissions, pour changer l'information de réservation d'émission en information d'émission enregistrée.

6. Un système selon la revendication 1, dans lequel les données de gestion comprennent des données d'abonné (D_{PRG}, B13), et
l'appareil comprend des moyens pour utiliser les données de gestion de façon à visualiser un état de déclaration de l'émission sur un écran de télévision, ces moyens comprenant :
des moyens pour allouer des données d'abonné d'une émission aux données de gestion correspondant à l'émission,
et des moyens pour visualiser l'état de déclaration de l'émission, sur la base des données d'abonné.

7. Un système selon la revendication 1, dans lequel l'appareil comprend des moyens pour solliciter une opération de la part de l'utilisateur, en visualisant des éléments de visualisation interactifs qui représentent des conditions de fonctionnement d'un dispositif électronique sur un écran de visualisation, comprenant :
des moyens de visualisation de personnage pour visualiser un personnage-guide manifestant des expressions et des actions qui correspondent au contenu de visualisation des éléments de visualisation interactifs, dans des positions qui correspondent à ces éléments de visualisation interactif sur l'écran de visualisation.

8. Un système selon la revendication 7, dans lequel le personnage-guide est constitué par des éléments d'image personnifiés qui peuvent être exprimés sous la forme d'une image animée.
